(19) Europäisches Patentamt
European Patent Office
Office européen des brevets

(11) EP 4 656 287 A1

(12) **EUROPEAN PATENT APPLICATION**
published in accordance with Art. 153(4) EPC

(43) Date of publication:
**03.12.2025 Bulletin 2025/49**

(21) Application number: **24763865.3**

(22) Date of filing: **26.02.2024**

(51) International Patent Classification (IPC):
***B01J 20/286*** (2006.01) ***B01D 15/16*** (2006.01)
***B01D 15/20*** (2006.01) ***B01J 20/10*** (2006.01)
***B01J 20/281*** (2006.01) ***B01J 20/283*** (2006.01)
***B01J 20/288*** (2006.01) ***G01N 30/26*** (2006.01)
***G01N 30/34*** (2006.01) ***G01N 30/56*** (2006.01)

(52) Cooperative Patent Classification (CPC):
**B01D 15/16; B01D 15/20; B01J 20/10; B01J 20/281; B01J 20/283; B01J 20/286; B01J 20/288; G01N 30/26; G01N 30/34; G01N 30/56**

(86) International application number:
**PCT/JP2024/006895**

(87) International publication number:
**WO 2024/181385 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.02.2023 JP 2023029001**

(71) Applicant: **Aqas Corporation**
**Kyoto-shi, Kyoto 612-8374 (JP)**

(72) Inventors:
- **KOBAYASHI, Hiroshi**
  **Hirakata-shi, Osaka 573-1148 (JP)**
- **WADA, Tomonori**
  **Kyoto-shi, Kyoto 606-8407 (JP)**
- **HIBINO, Kenichi**
  **Otsu-shi, Shiga 520-0221 (JP)**

(74) Representative: **Hoffmann Eitle**
**Patent- und Rechtsanwälte PartmbB**
**Arabellastraße 30**
**81925 München (DE)**

(54) **COLUMN FILLER FOR CHROMATOGRAPHY, COLUMN FOR CHROMATOGRAPHY, MANUFACTURING METHOD FOR COLUMN FOR CHROMATOGRAPHY, CHROMATOGRAPHY ANALYZER, AND ANALYSIS METHOD**

(57) The present disclosure aims to provide a chromatography column packing material, a chromatography column, a method for producing the chromatography column, a chromatography analysis apparatus, and an analysis method, suitable for separation of a mixture containing various analytes. A chromatography column packing material includes silica having a silanol group modified with a group represented by the following chemical formula (I):

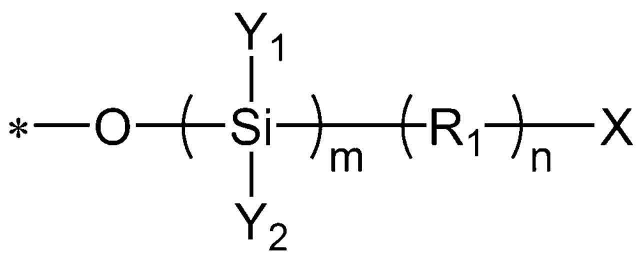

(I)

EP 4 656 287 A1

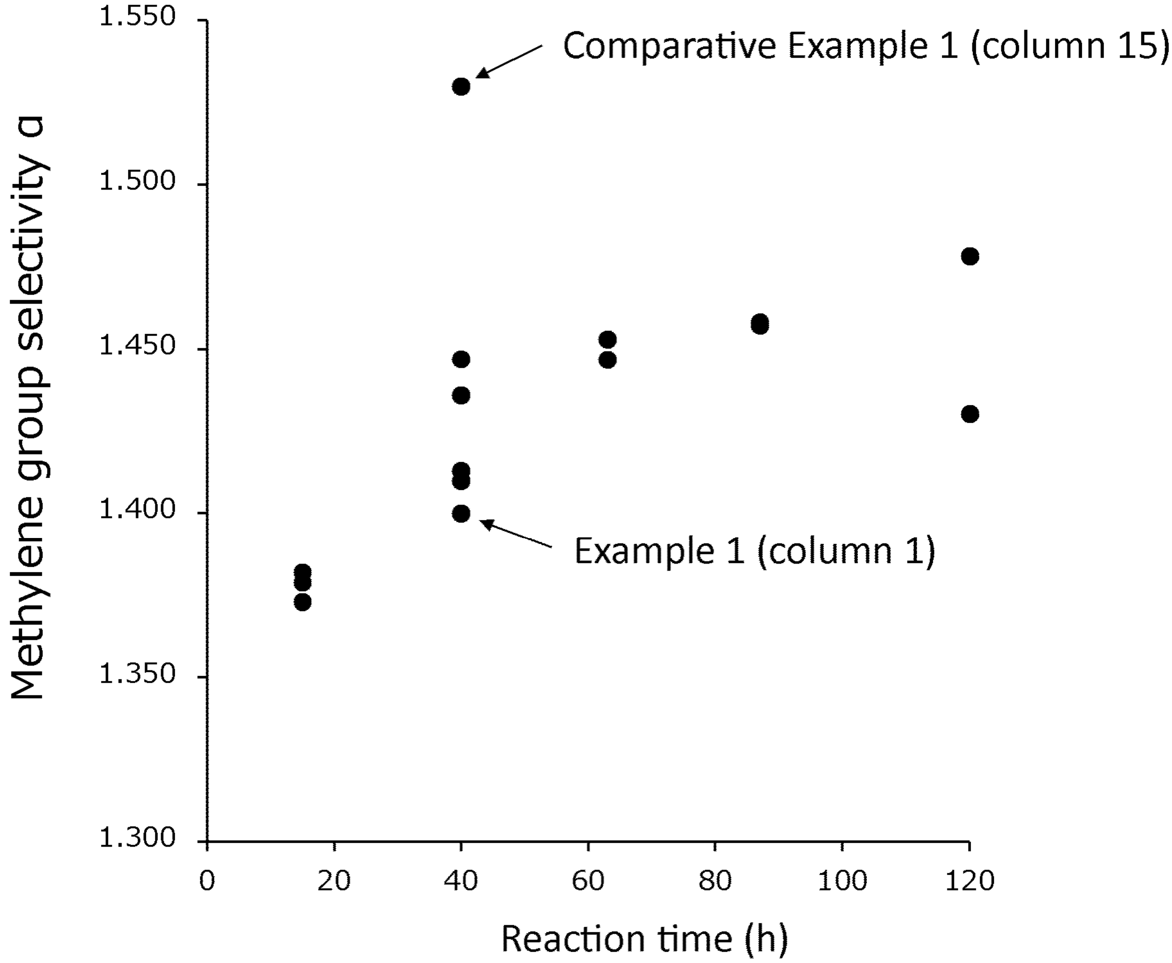
Comparative Example 1 (column 15)
Example 1 (column 1)
Methylene group selectivity α
1.550
1.500
1.450
1.400
1.350
1.300
0
20
40
60
80
100
120
Reaction time (h)

FIG. 1

## Description

TECHNICAL FIELD

The present disclosure relates to a chromatography column packing material, a chromatography column, a method for producing the chromatography column, a chromatography analysis apparatus, and an analysis method.

BACKGROUND ART

As a technique for separating a mixture, chromatography is generally used. In chromatography, the carrier used for sample transport is selected based on the properties of the components to be separated, and may be a gas, a liquid, or a supercritical fluid. In particular, in the separation and analysis of plant-derived components, liquid chromatography is primarily used. As a packing material for a liquid chromatography column, a hydrophobic silica gel modified with octadecylsilyl groups (hereinafter sometimes referred to as "ODS groups") is widely used (Patent Literature 1).

Citation List

Patent Literature

Patent Literature 1: JP 2003-172733 A

SUMMARY OF INVENTION

Technical Problem

On the other hand, an analytical column packed with a column packing material using a hydrophobic silica gel easily retains a hydrophobic analyte, but hardly retains a hydrophilic or amphiphilic analyte. Therefore, the column packed with a column packing material using a hydrophobic silica gel is not suitable for separation of a mixture containing various analytes, for example, a mixture containing hydrophilic or amphiphilic analytes.

Therefore, the object of the present disclosure is to provide a chromatography column packing material, a chromatography column, a method for producing the chromatography column, a chromatography analysis apparatus, and an analysis method, suitable for separation of a mixture containing various analytes.

Solution to Problem

In order to achieve the above object, the present disclosure provides a chromatography column packing material, including:
silica having a silanol group modified with a group represented by the following chemical formula (I):

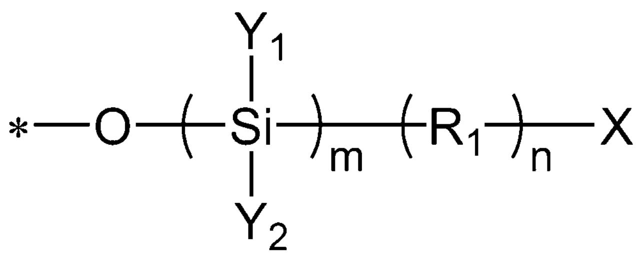

(I)

wherein in the chemical formula (I),

- $R_1$ is a methylene group, and further, at least one hydrogen atom of the methylene group is optionally substituted with a substituent,
- m is an integer of 1 or more,
- n is 0 or a positive integer,

X is a methyl group, a linear or branched alkyl group, an amino group, an amido group, a cyano group, an aryl group, an alkylaryl group, a carboxy group, or a carbamoyl group, and further, at least one hydrogen atom of the alkyl group, the amino group, the aryl group, the alkylaryl group, the carboxy group, or the carbamoyl group is optionally substituted with a substituent,
at least one of $Y_1$ or $Y_2$ is a hydrophilic group, and $Y_1$ and $Y_2$ may be identical to or different from each other, and * indicates a bonding position.

The present disclosure also provides a chromatography column packing material, including: silica modified with a reaction reagent represented by the following chemical formula (II):

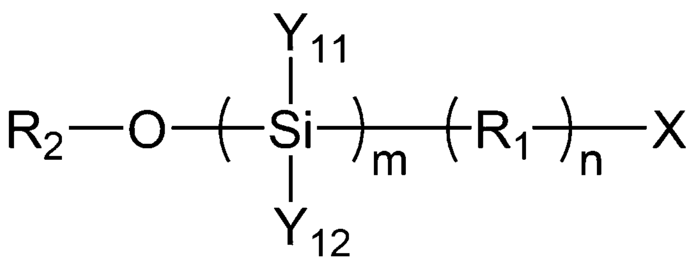

(II)

wherein in the chemical formula (II),

$R_1$ is a methylene group, and further, at least one hydrogen atom of the methylene group is optionally substituted with a substituent,
$R_2$ is a methyl group or a linear or branched alkyl group, and further, at least one hydrogen atom of the alkyl group is optionally substituted with a substituent,
m is an integer of 1 or more,
n is 0 or a positive integer,
X is a methyl group or a linear or branched alkyl group, an amino group, an amido group, a cyano group, an aryl group, an alkylaryl group, a carboxy group, or a carbamoyl group, and further, at least one hydrogen atom of the alkyl group, the amino group, the aryl group, the alkylaryl group, the carboxy group, or the carbamoyl group is optionally substituted with a substituent, and
at least one of $Y_{11}$ or $Y_{12}$ is a functional group capable of forming a silanol group.

The present disclosure also provides a chromatography column packed with the packing material according to the present disclosure.
A method for producing the chromatography column according to the present disclosure includes: modifying; and packing, wherein in the modifying, silanol groups of silica gel particles contained in a packing material are modified, and in the packing, the silica after the modification is packed into a chromatography column.
The method for producing the chromatography column according to the present disclosure includes: modifying; and packing, wherein in the modifying, silanol groups of monolithic silica contained in a packing material are modified, and in the packing, the silica after the modification is packed into a chromatography column.
A chromatography analysis apparatus according to the present disclosure includes: a chromatograph, an eluent, and an analytical column, wherein the analytical column is the chromatography column.
An analysis method of the present disclosure uses the analysis apparatus according to the present disclosure.

Advantageous Effects of Invention

According to the present disclosure, it is possible to provide a chromatography column packing material, a chromatography column, a method for producing the chromatography column, a chromatography analysis apparatus, and an analysis method, suitable for separation of a mixture containing various analytes.

BRIEF DESCRIPTION OF DRAWINGS

[FIG. 1] FIG. 1 is a diagram in which, for columns 1 to 15, methylene group selectivity α is plotted on the vertical axis, and the delivery time (reaction time) of the reaction reagent is plotted on the horizontal axis.

[FIG. 2] FIG. 2 shows chromatograms when components contained in black tea (Darjeeling) were separated using the column 1 and the column 15.

[FIG. 3] FIG. 3 shows chromatograms when components contained in five kinds of teas were separated using the column 1.

[FIG. 4] FIG. 4 shows chromatograms comparing the difference in separation ability based on the difference in mobile phases when the components contained in black tea (Darjeeling) were separated using column 1.

[FIG. 5] FIG. 5 shows a chromatogram when a component (rutin) contained in asparagus was separated using column 1.

DESCRIPTION OF EMBODIMENTS

Next, the present disclosure will be described more specifically with reference to examples. However, the present disclosure is not limited by the following descriptions.

In the present disclosure, terms such as technical terms and scientific technical terms have the same meanings as those generally understood by those skilled in the art to which the present disclosure belongs, unless otherwise defined. When the meaning of a term is defined, the meaning of the term follows that definition.

In the present disclosure, "mass" may be read as "weight" unless otherwise specified. For example, "mass ratio" may be read as "weight ratio" unless otherwise specified, and "mass %" may be read as "weight %" unless otherwise specified.

Also, in the present disclosure, unless otherwise specified, when a substituent or compound (for example, a group represented by the chemical formula (I) or a compound represented by the chemical formula (II) to be described below) has isomers such as tautomers or stereoisomers (for example, geometric isomers, conformational isomers, or optical isomers), any of such isomers may be used in the present disclosure. Also, when a compound can form a salt, the salt can also be used in the present disclosure unless otherwise specified. The salt may be an acid addition salt or a base addition salt. Further, the acid forming the acid addition salt may be an inorganic acid or an organic acid, and the base forming the base addition salt may be an inorganic base or an organic base. The inorganic acid is not particularly limited, and examples thereof include sulfuric acid, phosphoric acid, hydrofluoric acid, hydrochloric acid, carbonic acid, hydrobromic acid, hydroiodic acid, hypofluorous acid, hypochlorous acid, hypobromous acid, hypoiodous acid, fluorous acid, chlorous acid, bromous acid, iodous acid, fluoric acid, chloric acid, bromic acid, iodic acid, perfluoric acid, perchloric acid, perbromic acid, and periodic acid. The organic acid is also not particularly limited, and examples thereof include p-toluenesulfonic acid, methanesulfonic acid, oxalic acid, p-bromobenzenesulfonic acid, succinic acid, citric acid, benzoic acid, and acetic acid. The inorganic base is not particularly limited, and examples thereof include ammonium hydroxide, alkali metal hydroxides, alkaline earth metal hydroxides, carbonates, and hydrogen carbonates, and specific examples thereof include sodium hydroxide, potassium hydroxide, potassium carbonate, sodium carbonate, sodium hydrogen carbonate, potassium hydrogen carbonate, calcium hydroxide, and calcium carbonate. The organic base is also not particularly limited, and examples thereof include ethanolamine, triethylamine, and tris(hydroxymethyl)aminomethane. A method for producing these salts is also not particularly limited, and for example, these salts can be produced by appropriately adding the above described acid or base to the compound by a known method, or the like.

Also, in the present disclosure, unless otherwise specified, a chain substituent (for example, a hydrocarbon group such as an alkyl group or an unsaturated aliphatic hydrocarbon group) may be linear or branched, and the number of carbon atoms thereof is not particularly limited, and may be, for example, 1 to 40, 1 to 32, 1 to 24, 1 to 18, 1 to 12, 1 to 6, or 1 to 2 (2 or more in the case of an unsaturated hydrocarbon group). In addition, in the present disclosure, the number of ring members (the number of atoms constituting a ring) of a cyclic group (for example, an aryl group, a heteroaryl group, or the like) is not particularly limited, and may be, for example, 5 to 32, 5 to 24, 6 to 18, 6 to 12, or 6 to 10. Furthermore, when isomers exist for substituents or the like, any of such isomers may be used unless otherwise specified. For example, the term 'naphthyl group' may refer to either a 1-naphthyl group or a 2-naphthyl group.

<Chromatography Column Packing Material>

First, the chromatography column packing material of the present disclosure will be described.

In one aspect of the chromatography column packing material of the present disclosure, further in the chemical formula (I), $R_1$ is a methylene group, in which at least one hydrogen atom of the methylene group is optionally substituted with a substituent, and is preferably unsubstituted. When substituted with a substituent, the substituent is preferably substituted with, for example, a hydrophobic functional group.

In the chemical formula (I), m is an integer of 1 or more, and may be, for example, 10 or less, 5 or less, 3 or less, or 2 or less, and is preferably 1.

In the chemical formula (I), n is 0 or a positive integer, and may be, for example, 1 or more, 2 or more, 3 or more, 4 or more, 5 or more, 7 or more, 9 or more, 11 or more, 13 or more, 15 or more, or 17 or more, and may be 29 or less, 27 or less, 25 or less, 23 or less, 21 or less, or 19 or less. n may be, for example, 0 to 29, 0 to 3, or 2 to 3.

In the chemical formula (I), X is a methyl group, a linear or branched alkyl group, an amino group, an amido group, a cyano group, an aryl group, an alkylaryl group, a carboxy group, or a carbamoyl group. Further, optionally, at least one hydrogen atom of the alkyl group, amino group, aryl group, alkylaryl group, carboxy group, or carbamoyl group is substituted with a substituent, and when substituted with a substituent, the substituent may be, for example, a non-aromatic hydrocarbon group (which may be linear or branched, saturated or unsaturated, and optionally contains a cyclic structure), an aromatic group (which may be an aromatic group containing no heteroatom (aryl group) or a heteroaromatic group containing heteroatom (heteroaryl group), and may be a monocyclic or condensed ring), a halogen, an amino group, a nitro group, a sulfo group, or a cyano group, and further, at least one hydrogen atom of each substituent is optionally substituted with any other substituent.

For X, the linear or branched alkyl group is, for example, a linear or branched alkyl group having 1 or more, 4 or more, 5 or more, 8 or more, or 10 or more carbon atoms and having 30 or less, 24 or less, 18 or less, or 12 or less carbon atoms.

In the chemical formula (I), at least one of $Y_1$ or $Y_2$ is a hydrophilic group. For example, both $Y_1$ and $Y_2$ may be hydrophilic groups, only one of $Y_1$ or $Y_2$ may be a hydrophilic group, or one of $Y_1$ or $Y_2$ may be a hydrophobic group. Examples of the hydrophilic group include a hydroxyl group, a carboxyl group, and an amino group, which may be in an ionized form such as $-O^-$, $-COO^-$, or $-NH_3^+$. Examples of the hydrophobic group include a methyl group, a linear or branched alkyl group, an alkenyl group, an aryl group, an alkylaryl group, and a polycyclic aryl group. Further, at least one hydrogen atom of each substituent is optionally substituted with any other substituent. $Y_1$ and $Y_2$ may be identical to or different from each other.

In the chemical formula (I), "*" indicates a bonding position. The bonding position is, for example, a bonding position of a bond formed after a compound having a group represented by the chemical formula (I) and a silanol group of the silica are dehydration-condensed.

The ratio of silanol groups (a) contained in the silica after the modification to silanol groups (b) contained in the silica before the modification may be, for example, 100 mol% or more. The ratio can be represented by, for example, the equation "a (mol)/b(mol) $\times$ 100".

The packing material of the present disclosure includes $Y_1$ and $Y_2$ as in the chemical formula (I). For example, when at least one of $Y_1$ or $Y_2$ is a hydroxyl group, the ratio is 100 mol% or more. That is, for example, when only one of $Y_1$ or $Y_2$ is a hydroxyl group, the ratio is 100 mol%, and when both of $Y_1$ and $Y_2$ contain a hydroxyl group, the ratio exceeds 100 mol%. When the ratio is 100 mol% or more, the silanol group of the packing material of the present disclosure is modified with a hydroxyl group, which is a hydrophilic group. Therefore, for example, in the case of analyzing a mixture containing at least one hydrophilic or amphiphilic analyte, the affinity for the hydrophilic or amphiphilic analyte is improved, and as a result, the packing material is particularly effective in, for example, separating these analytes.

For example, the lower limit of the ratio may be 100 mol% or more, 110 mol% or more, or 116 mol% or more, and the upper limit thereof may be 135 mol% or less, 130 mol% or less, or 125 mol% or less. The ratio is, for example, 100 to 135 mol%, 110 to 130 mol%, or 116 to 125 mol%.

The ratio can be calculated as follows, for example. The calculation method differs between the case where both $Y_1$ and $Y_2$ are hydroxyl groups and the case where only one of $Y_1$ or $Y_2$ is a hydroxyl group in the chemical formula (I).

First, the case where both $Y_1$ and $Y_2$ are hydroxyl groups will be described. When both $Y_1$ and $Y_2$ are hydroxyl groups, the ratio can be calculated using, for example, liquid chromatography. First, the carbon content D (wt%) of the silica after the modification is calculated by the following equation (1).

$$D\ (\mathrm{wt\%}) = A\alpha + B \qquad (1)$$

In the equation (1), as A and B, for example, numerical values described in a Literature (Kazuhiro Kimata et al. (1989). JOURNAL OF CHROMATOGRAPHIC SCIENCE, Vol. 27, 721-728) can be adopted. In this case, A and B are "A = 69.90 wt%" and "B = -87.35 wt%", respectively.

Also, $\alpha$ in the equation (1) can be measured as follows. First, the elution times ($t_R$) of amylbenzene and butylbenzene are analyzed by liquid chromatography using a column containing the packing material of the present disclosure under isocratic conditions using a mixed solvent of water/methanol = 20/80 (v/v) as a mobile phase. From the obtained each elution time ($t_R$) and the column 1-volume elution time ($t_0$) of the solvent, the retention coefficients ($k_{(R)}$) of amylbenzene and butylbenzene are obtained using the following equation (2).

$$k_{(R)} = (t_R - t_0) / t_0 \qquad (2)$$

From the retention coefficient ($k_{(R)}$) of each of amylbenzene and butylbenzene, $\alpha$ is calculated using the following equation (3).

$$\alpha = k\ (_{amylbenzene}) / k(_{butylbenzene}) \qquad (3)$$

Then, the carbon content D satisfies the relationship of the following equation (4) with the number of moles of substituents bonded per $1m^2$ of silica, i.e., the density E ($\mu mol/m^2$) of the substituents. For example, by plotting D and E described in the Literature, x and y in equation (4) are determined to be 0.1848 and -0.3744, respectively.

$$E\ (\mu mol/m^2) = xD + y \qquad (4)$$

Here, the amount of unmodified silanol groups on silica surfaces is, for example, 8 $\mu mol/m^2$ according to a Literature (Yoshihisa Sudo et al. (2011). CHROMATOGRAPHY, Vol. 32 No. 2). Therefore, when silanol groups newly generated by bonding of substituents are not taken into consideration, the amount of silanol groups present on the silica surfaces after modification is "8 - E ($\mu mol/m^2$)".

Here, the amount of silanol groups newly generated by the bonding of substituents is "2 $\times$ E ($\mu mol/m^2$)" when both $Y_1$ and $Y_2$ in the chemical formula (I) are silanol groups. Thus, when both $Y_1$ and $Y_2$ are hydroxyl groups, the amount of silanol groups present is "(8 - E) + (2 $\times$ E) = 8 + E ($\mu mol/m^2$)". Therefore, when both $Y_1$ and $Y_2$ are silanol groups, the ratio F (mol%) of silanol groups remaining on the silica surface after the modification reaction can be obtained based on the following equation (5).

$$F\ (mol\%) = (8 + E) / 8 \times 100 \qquad (5)$$

On the other hand, when only one of $Y_1$ or $Y_2$ in the chemical formula (I) is a hydroxyl group, the silanol group newly generated by bonding of substituents is "E ($\mu mol/m^2$)". Therefore, when only one of $Y_1$ or $Y_2$ is a hydroxyl group, the amount of silanol group present is "(8 - E) + E = 8 ($\mu mol/m^2$)". Therefore, in this case, the ratio F (mol%) of silanol group remaining on the silica surface after the modification reaction is 100 (mol%) from "F (mol%) = 8 / 8 $\times$ 100".

Although the above method has been described as an example of calculating the ratio, the calculation is not limited thereto. For example, the ratio may be calculated by various quantitative analyses. For example, the ratio may be calculated from the results of quantitative analysis of silanol groups before and after the modification of the silica, performed by energy dispersive X-ray spectrometry (EDX, EDS), wavelength dispersive X-ray spectrometry (WDS), X-ray photoelectron spectroscopy (XPS, ESCA), scanning electron microscope coupled with energy dispersive X-ray spectrometer (SEM-EDS), mass spectrometry (MS), infrared spectroscopy, Raman spectroscopy, or the like.

In one aspect of the chromatography column packing material of the present disclosure, in the chemical formula (II), $R_1$ is a methylene group, and further, at least one hydrogen atom of the methylene group is optionally substituted with a substituent, and is preferably unsubstituted. When substituted with a substituent, the substituent is preferably substituted with, for example, a hydrophobic functional group.

In the chemical formula (II), m is an integer of 1 or more, and may be, for example, 10 or less, 5 or less, 3 or less, or 2 or less, and is preferably 1.

In the chemical formula (II), n is 0 or a positive integer, and may be, for example, 1 or more, 2 or more, 3 or more, 4 or more, 5 or more, 7 or more, 9 or more, 11 or more, 13 or more, 15 or more, or 17 or more, and may be 29 or less, 27 or less, 25 or less, 23 or less, 21 or less, or 19 or less. n may be, for example, 0 to 29, 0 to 3, or 2 to 3.

In the chemical formula (II), X is a methyl group, a linear or branched alkyl group, an amino group, an amido group, a cyano group, an aryl group, an alkylaryl group, a carboxy group, or a carbamoyl group. Further, optionally, at least one hydrogen atom of the alkyl group, amino group, aryl group, alkylaryl group, carboxy group, or carbamoyl group is substituted with a substituent, and when substituted with a substituent, the substituent may be, for example, a non-aromatic hydrocarbon group (which may be linear or branched, saturated or unsaturated, and optionally has a cyclic structure), an aromatic group (which may be an aromatic group containing no heteroatom (aryl group) or a heteroaromatic group containing heteroatom (heteroaryl group), and may be a monocyclic or condensed ring), a halogen, an amino group, a nitro group, a sulfo group, or a cyano group, and further, at least one hydrogen atom of each substituent is optionally substituted with any other substituent.

For X, the linear or branched alkyl group is, for example, a linear or branched alkyl group having 1 or more, 4 or more, 5 or more, 8 or more, or 10 or more carbon atoms and having 30 or less, 24 or less, 18 or less, or 12 or less carbon atoms.

In the chemical formula (II), at least one of $Y_{11}$ or $Y_{12}$ may be a functional group capable of forming a silanol group. For example, at least one of $Y_{11}$ or $Y_{12}$ is a linear or branched alkoxy group, a halogen atom, or a hydrophilic group, and further, at least one hydrogen atom of the alkoxy group is optionally substituted with a substituent. When substituted with a

substituent, the substituent may be, for example, a non-aromatic hydrocarbon group (which may be linear or branched, saturated or unsaturated, and optionally has a cyclic structure), an aromatic group (which may be aromatic group containing no heteroatom (aryl group) or heteroaromatic group containing heteroatom (heteroaryl group), and may be a monocyclic or condensed ring), a halogen, an amino group, a nitro group, a sulfo group, or a cyano group, and further, at least one hydrogen atom of each substituent is optionally substituted with any other substituent. The linear or branched alkoxy group is, for example, a linear or branched alkoxy group having 1 or more, 3 or more, or 5 or more carbon atoms and having 10 or less, 8 or less, or 6 or less carbon atoms. Examples of the linear or branched alkoxy group include a methoxy group, an ethoxy group, a propoxy group, an isopropoxy group, an n-butoxy group, an isobutoxy group, a sec-butoxy group, and a tert-butoxy group. Examples of the halogen atom include a fluorine atom, a chlorine atom, a bromine atom, and an iodine atom. Examples of the hydrophilic group include a hydroxy group, a carboxy group, an amino group, a dimethylamino group, and a diethylamino group, which may be in an ionized form such as $-O^-$, $-COO^-$, or $-NH_3^+$. Examples of the hydrophobic group include a methyl group, a linear or branched alkyl group, an alkenyl group, an aryl group, an alkylaryl group, and a polycyclic aryl group. Further, at least one hydrogen atom of each substituent is optionally substituted with any other substituent. $Y_{11}$ and $Y_{12}$ may be identical to or different from each other.

Examples of the reaction reagent represented by the chemical formula (II) are illustrated by the following compounds 1-1 to 11-25. Here, the compound 1 is a group of compounds represented by the chemical formula (II) wherein m = 1, n = 1, and X = methyl group. The compound 2 is a group of compounds represented by the chemical formula (II) wherein m = 1, n = 3, and X = methyl group. The compound 3 is a group of compounds represented by the chemical formula (II) wherein m = 1, n = 7, and X = methyl group. The compound 4 is a group of compounds represented by the chemical formula (II) wherein m = 1, n = 11, and X = methyl group. The compound 5 is a group of compounds represented by the chemical formula (II) wherein m = 1, n = 17, and X = methyl group. The compound 6 is a group of compounds represented by the chemical formula (II) wherein m = 1, n = 21, and X = methyl group. The compound 7 is a group of compounds represented by the chemical formula (II) wherein m = 1, n = 29, and X = methyl group. The compound 8 is a group of compounds represented by the chemical formula (II) wherein m = 1, n = 1, and X = branched alkyl group. The compound 9 is a group of compounds represented by the chemical formula (II) wherein m = 1, n = 3, and X = branched alkylamine. The compound 10 is a group of compounds represented by the chemical formula (II) wherein m = 1, n = 11, and X = aryl group. The compound 11 is a group of compounds represented by the chemical formula (II) wherein m = 1, n = 11, and X = cyano group.

Compound 1-1

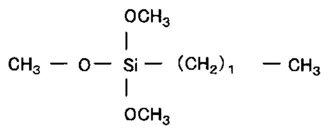

Compound 1-2

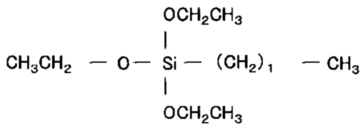

Compound 1-9

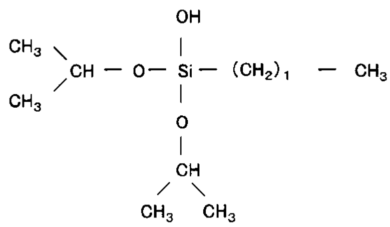

Compound 1-3

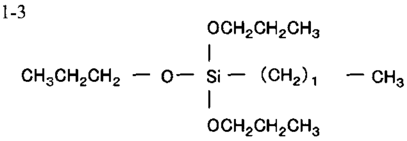

Compound 1-4

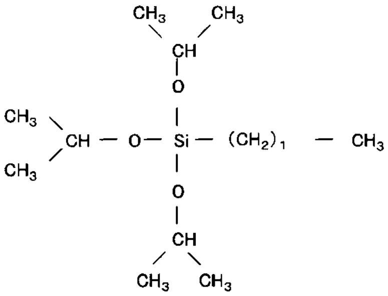

Compound 1-5

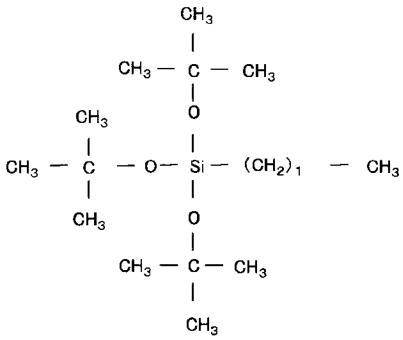

Compound 1-6

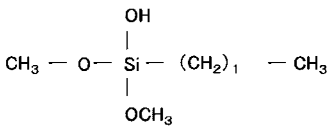

Compound 1-7

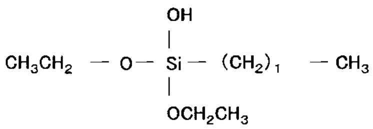

Compound 1-8

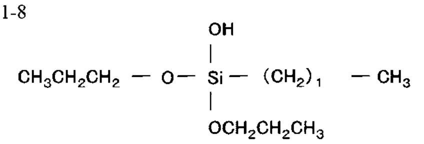

Compound 1-10

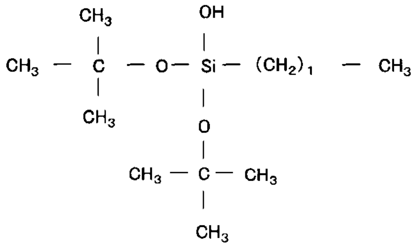

Compound 1-11

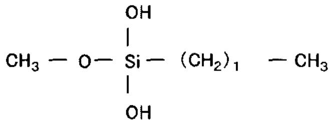

Compound 1-12

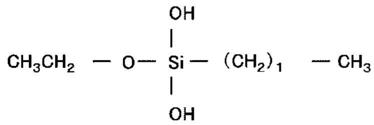

Compound 1-13

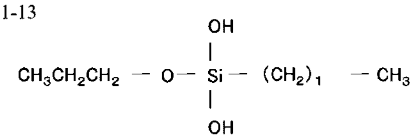

Compound 1-14

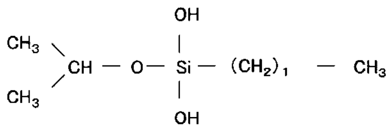

Compound 1-15

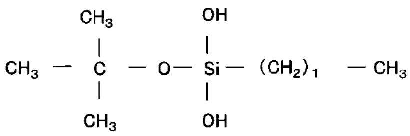

Compound 1-16

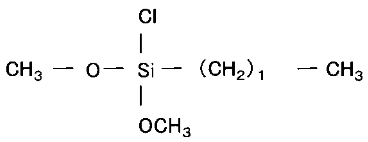

Compound 1-21

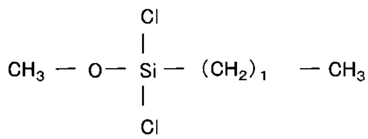

Compound 1-17

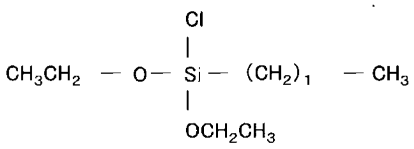

Compound 1-18

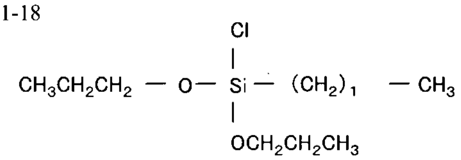

Compound 1-19

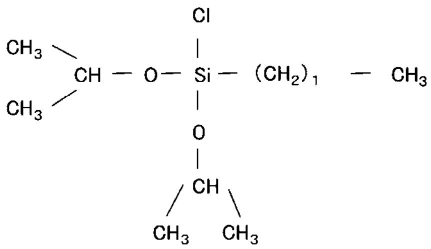

Compound 1-20

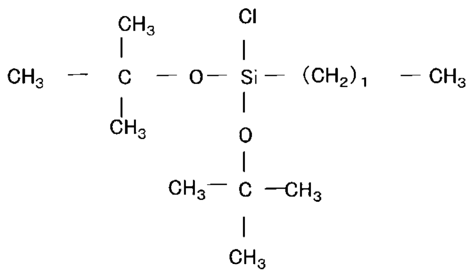

Compound 1-22

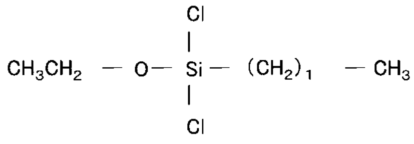

Compound 1-23

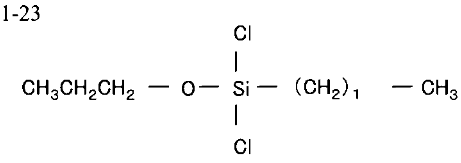

Compound 1-24

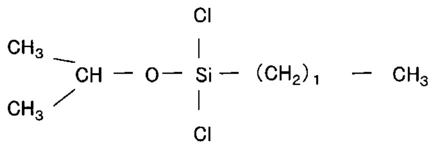

Compound 1-25

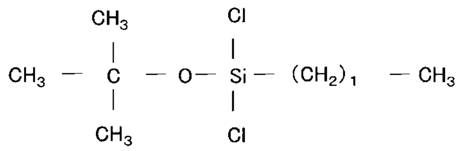

Compound 2-1

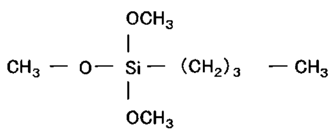

Compound 2-2

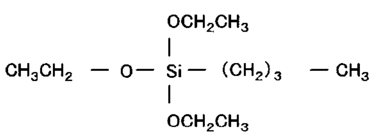

Compound 2-9

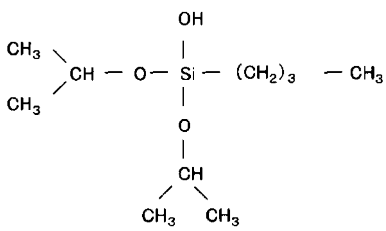

Compound 2-3

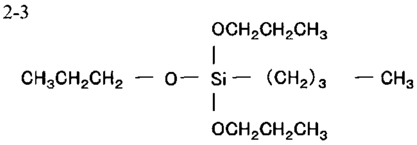

Compound 2-4

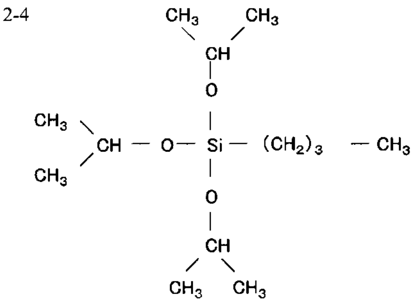

Compound 2-5

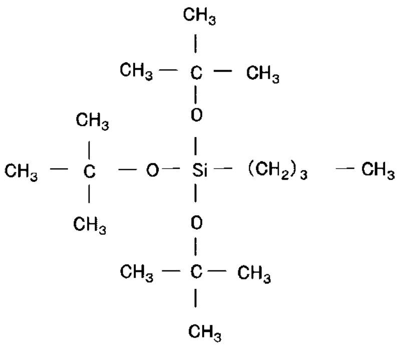

Compound 2-6

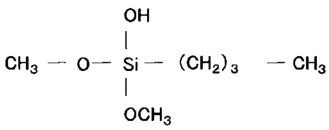

Compound 2-7

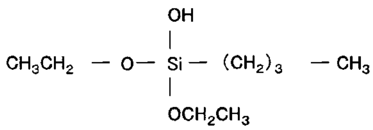

Compound 2-8

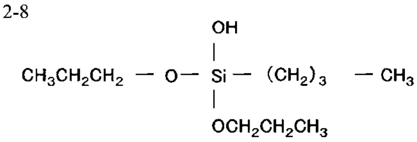

Compound 2-10

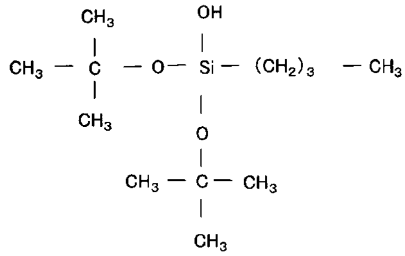

Compound 2-11

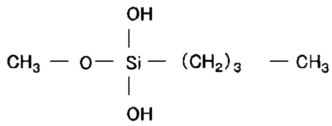

Compound 2-12

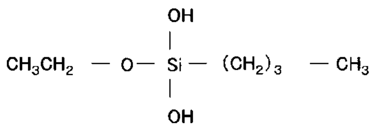

Compound 2-13

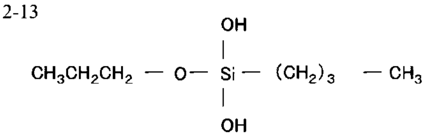

Compound 2-14

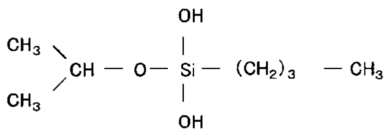

Compound 2-15

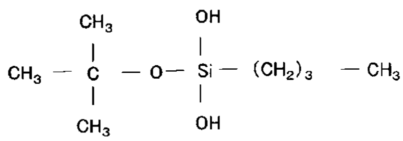

Compound 2-16

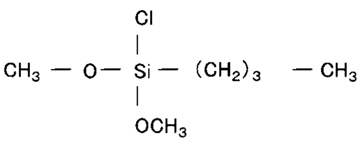

Compound 2-21

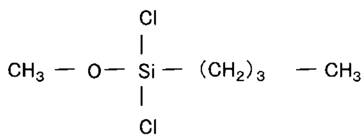

Compound 2-17

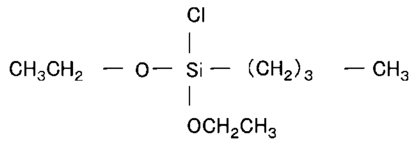

Compound 2-22

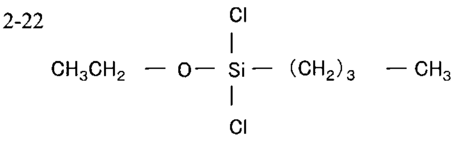

Compound 2-18

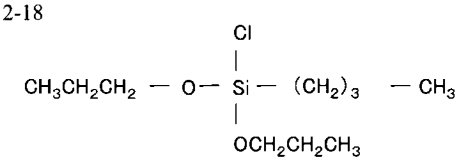

Compound 2-23

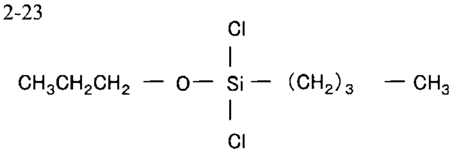

Compound 2-19

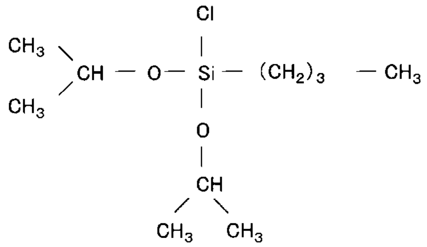

Compound 2-24

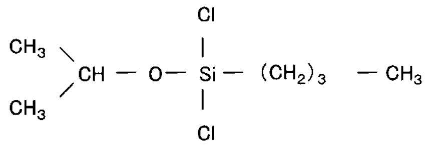

Compound 2-20

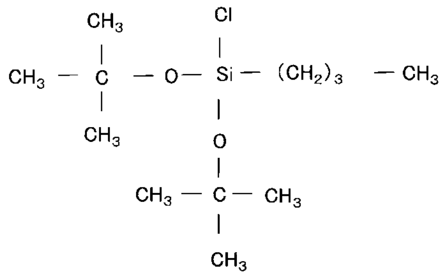

Compound 2-25

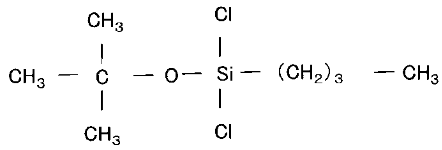

Compound 3-1

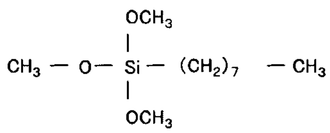

Compound 3-2

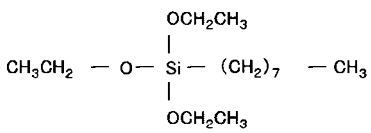

Compound 3-9

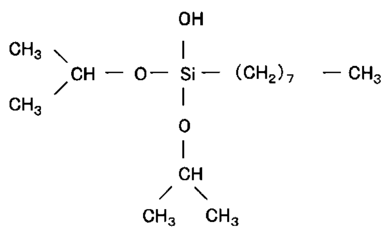

Compound 3-3

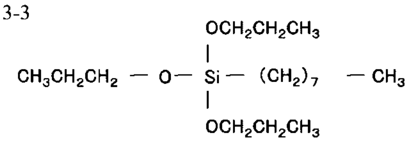

Compound 3-4

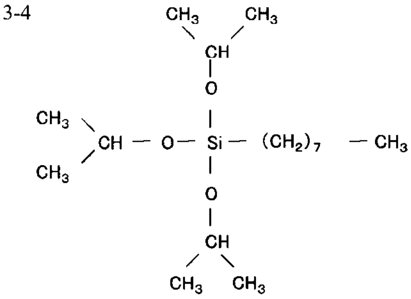

Compound 3-5

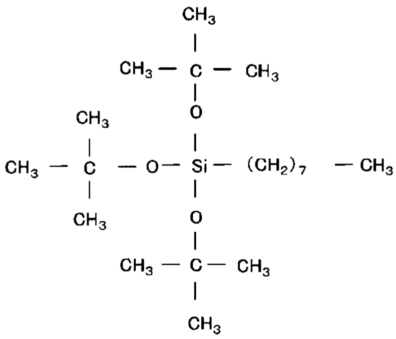

Compound 3-6

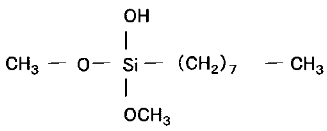

Compound 3-7

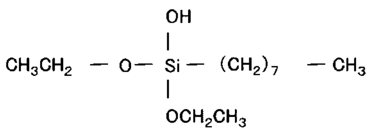

Compound 3-8

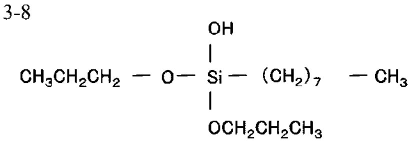

Compound 3-16

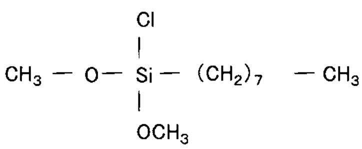

Compound 3-10

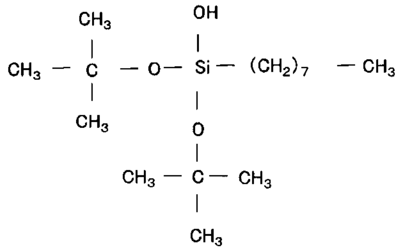

Compound 3-11

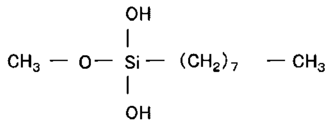

Compound 3-12

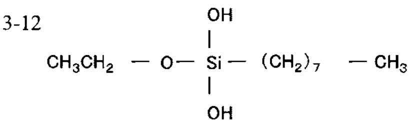

Compound 3-13

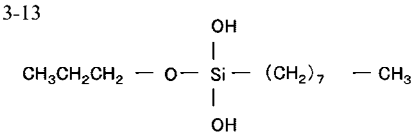

Compound 3-14

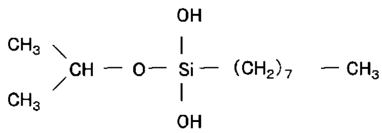

Compound 3-15

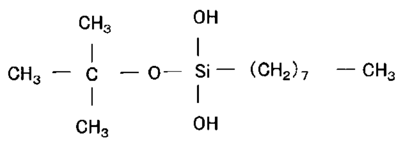

Compound 3-21

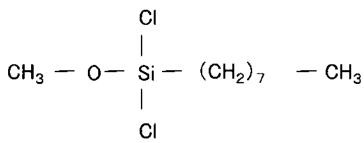

Compound 3-17

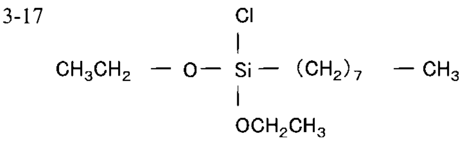

Compound 3-22

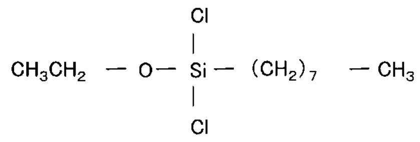

Compound 3-18

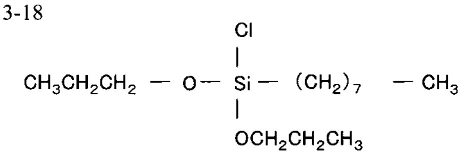

Compound 3-23

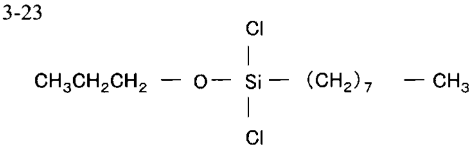

Compound 3-19

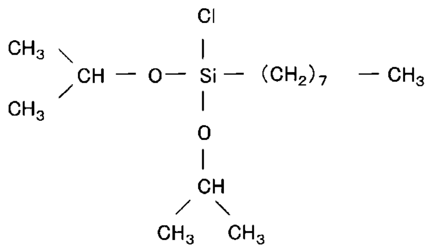

Compound 3-24

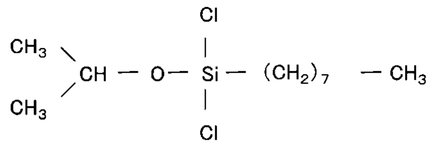

Compound 3-20

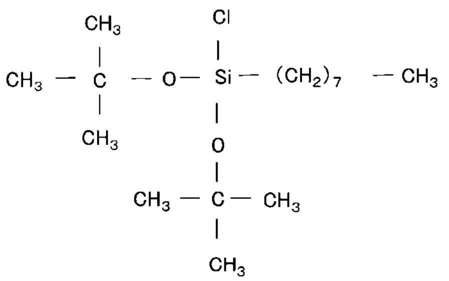

Compound 3-25

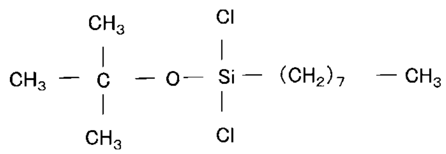

Compound 4-1

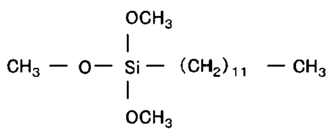

Compound 4-2

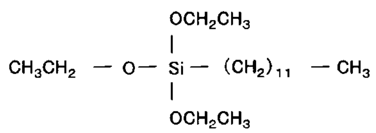

Compound 4-9

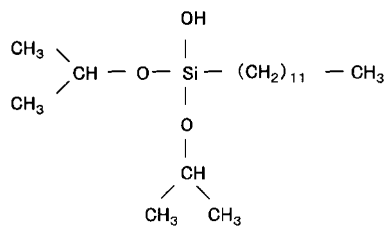

Compound 4-3

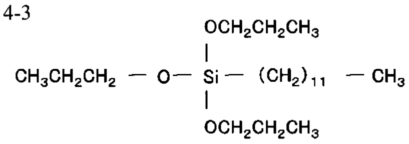

Compound 4-4

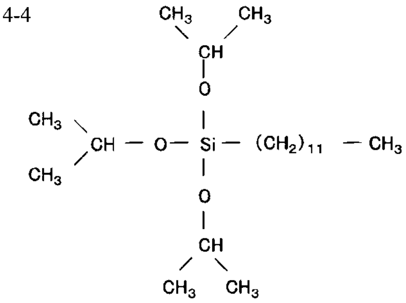

Compound 4-5

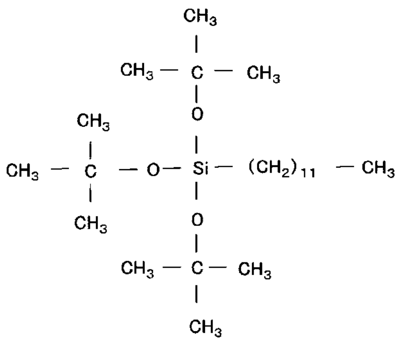

Compound 4-6

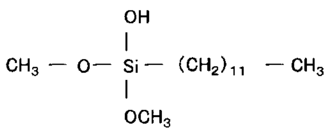

Compound 4-7

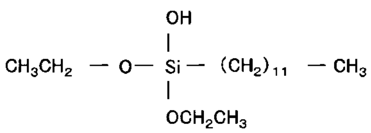

Compound 4-8

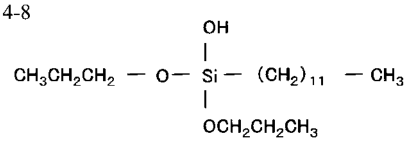

Compound 4-10

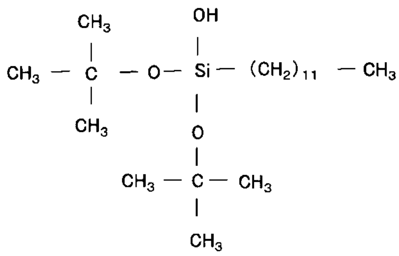

Compound 4-11

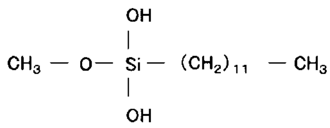

Compound 4-12

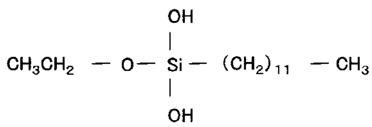

Compound 4-13

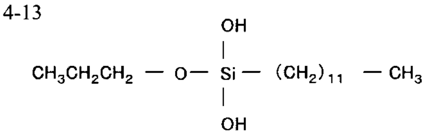

Compound 4-14

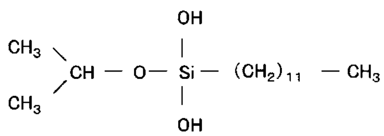

Compound 4-15

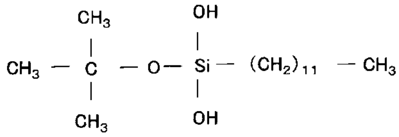

Compound 4-16

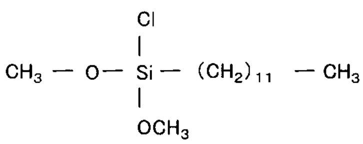

Compound 4-21

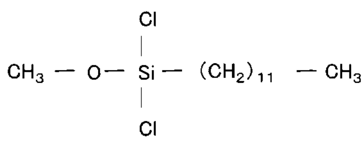

Compound 4-17

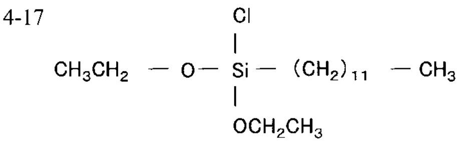

Compound 4-18

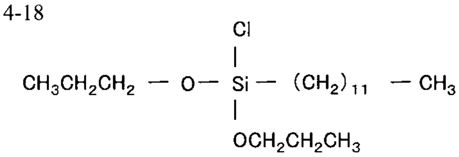

Compound 4-19

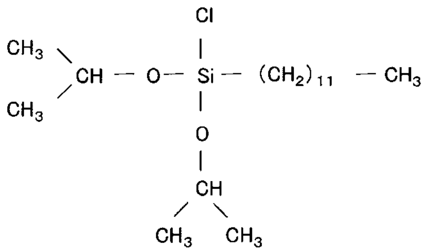

Compound 4-20

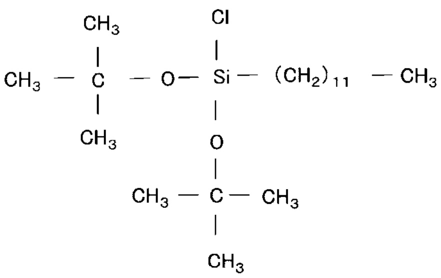

Compound 5-1

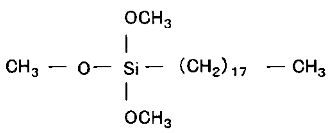

Compound 5-2

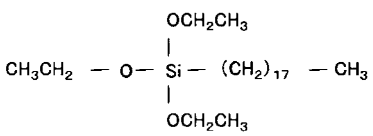

Compound 4-22

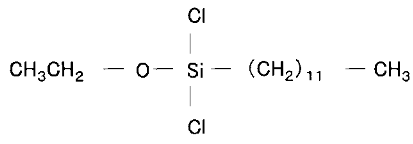

Compound 4-23

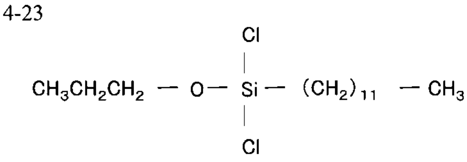

Compound 4-24

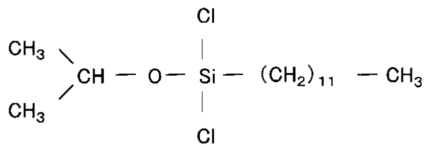

Compound 4-25

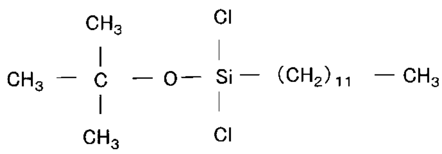

Compound 5-9

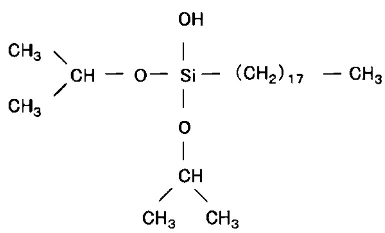

Compound 5-3

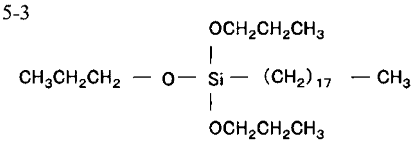

Compound 5-4

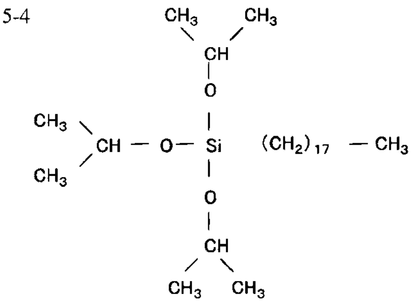

Compound 5-5

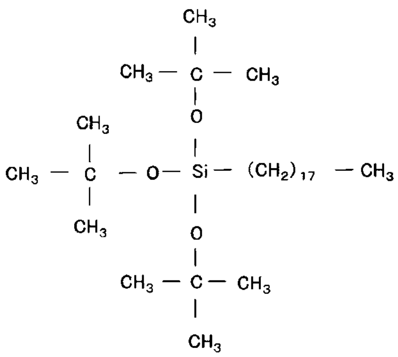

Compound 5-6

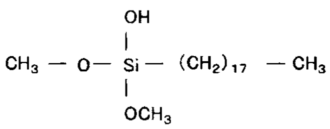

Compound 5-7

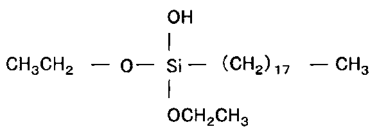

Compound 5-8

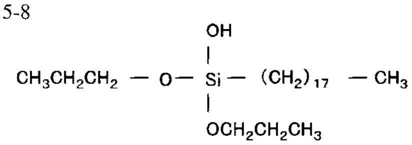

Compound 5-10

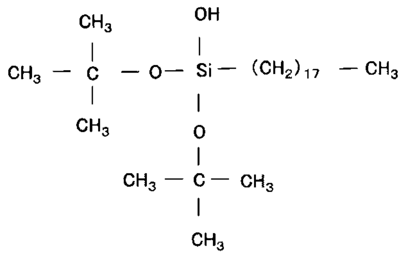

Compound 5-11

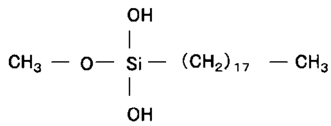

Compound 5-12

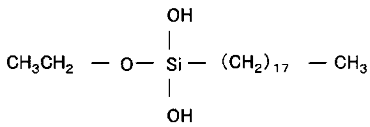

Compound 5-13

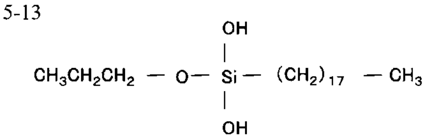

Compound 5-14

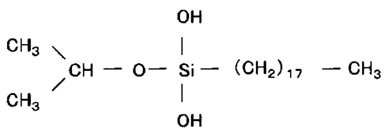

Compound 5-15

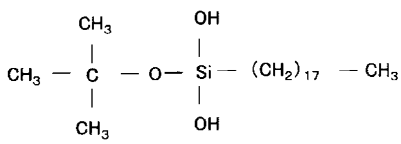

Compound 5-16

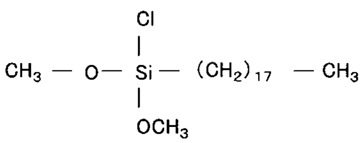

Compound 5-21

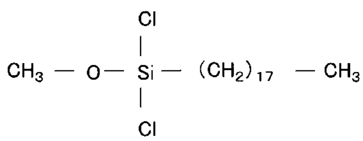

Compound 5-17

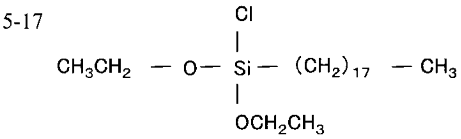

Compound 5-18

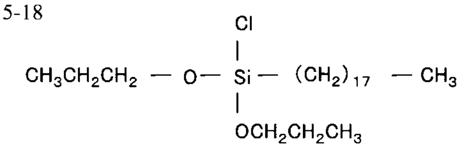

Compound 5-19

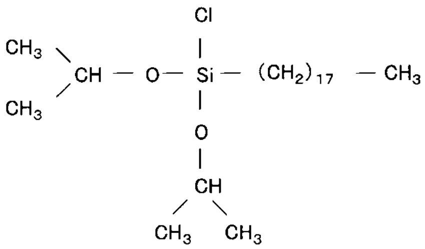

Compound 5-20

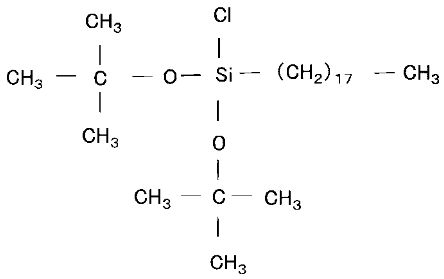

Compound 5-22

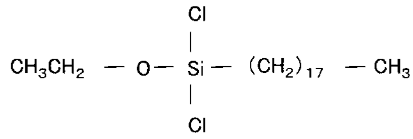

Compound 5-23

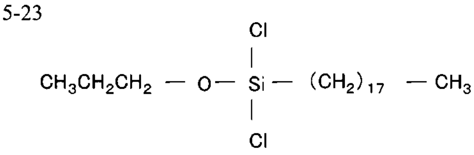

Compound 5-24

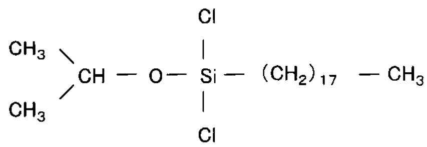

Compound 5-25

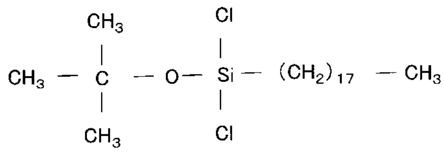

Compound 6-1

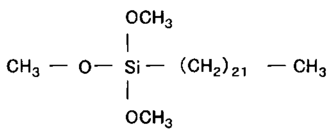

Compound 6-2

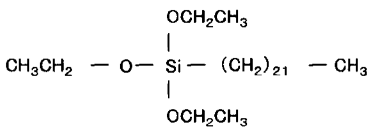

Compound 6-9

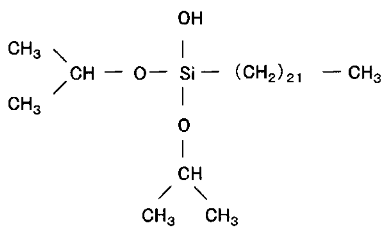

Compound 6-3

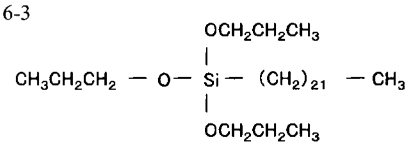

Compound 6-4

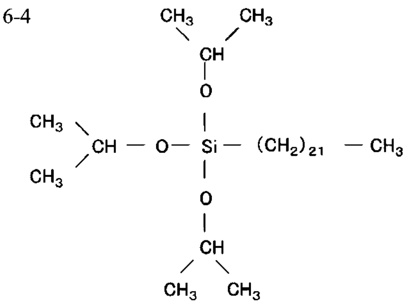

Compound 6-5

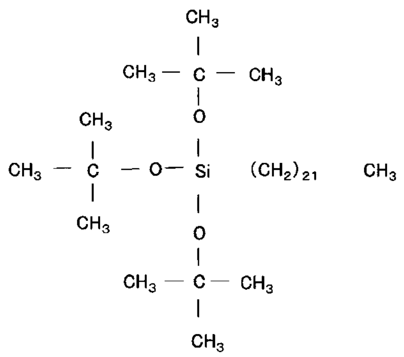

Compound 6-6

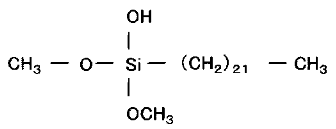

Compound 6-7

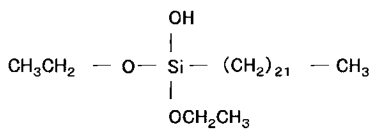

Compound 6-8

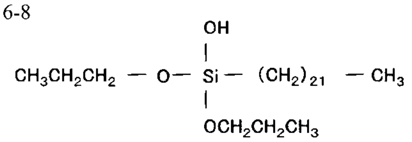

Compound 6-10

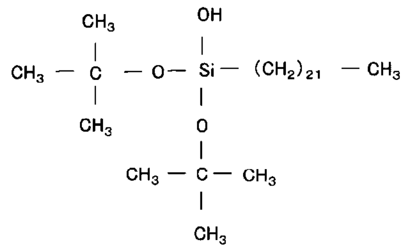

Compound 6-11

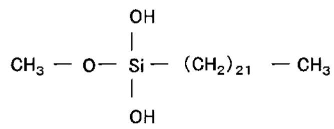

Compound 6-12

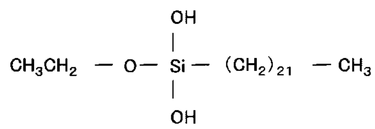

Compound 6-13

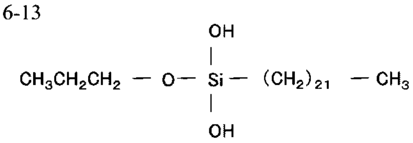

Compound 6-14

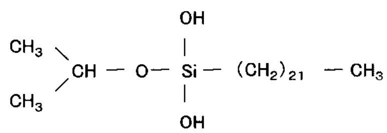

Compound 6-15

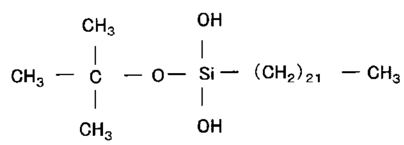

Compound 6-16

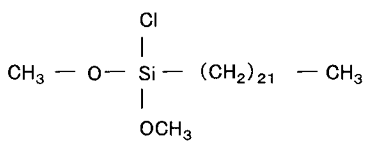

Compound 6-21

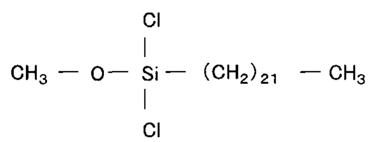

Compound 6-17

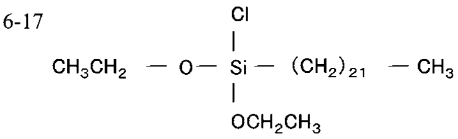

Compound 6-18

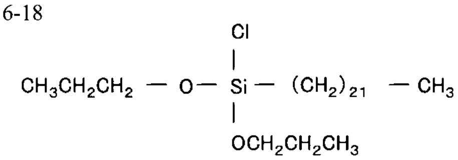

Compound 6-19

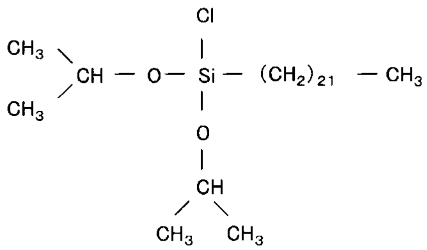

Compound 6-20

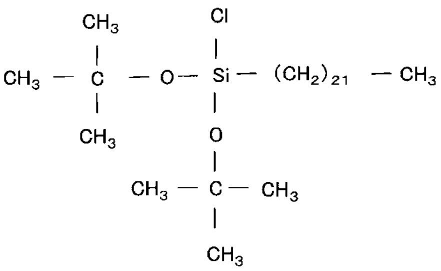

Compound 7-1

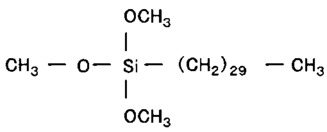

Compound 7-2

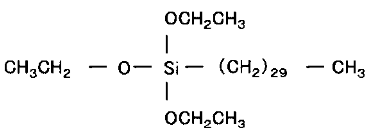

Compound 6-22

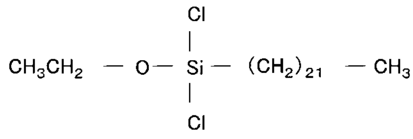

Compound 6-23

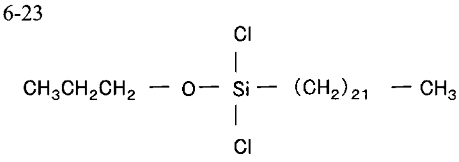

Compound 6-24

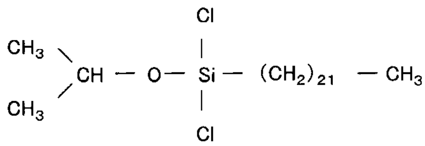

Compound 6-25

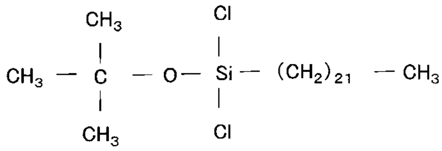

Compound 7-9

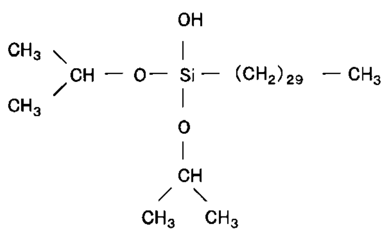

Compound 7-3

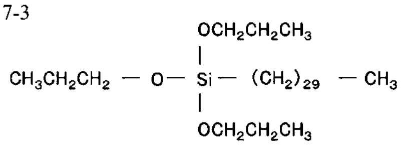

Compound 7-4

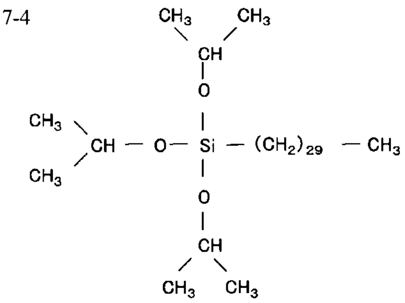

Compound 7-5

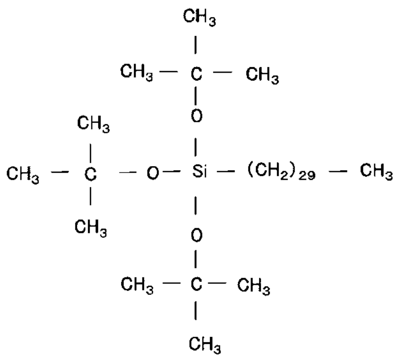

Compound 7-6

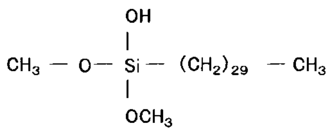

Compound 7-7

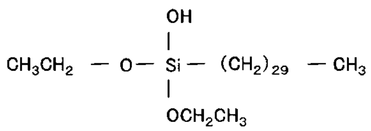

Compound 7-8

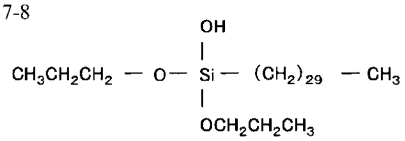

Compound 7-10

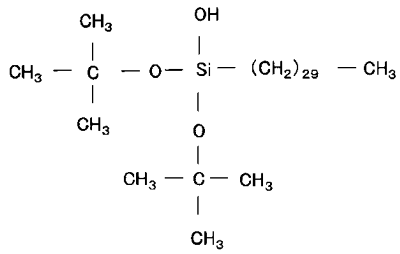

Compound 7-11

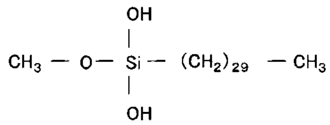

Compound 7-12

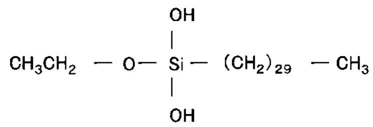

Compound 7-13

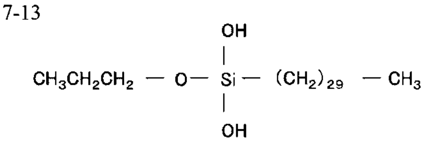

Compound 7-14

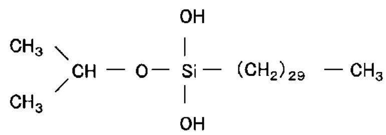

Compound 7-15

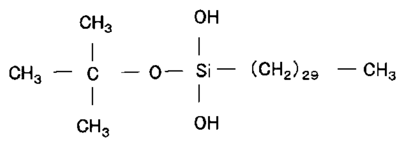

Compound 7-16

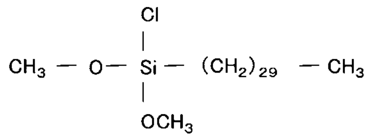

Compound 7-17

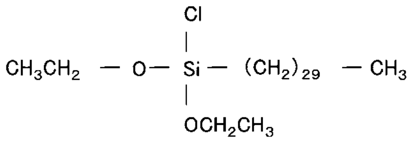

Compound 7-18

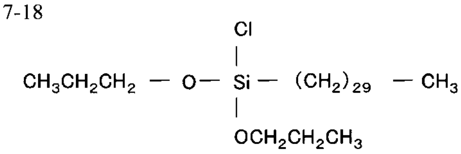

Compound 7-19

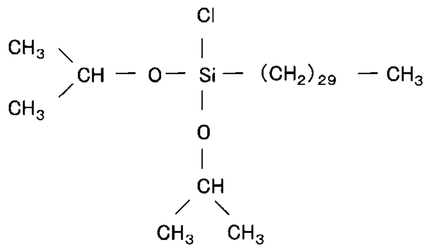

Compound 7-20

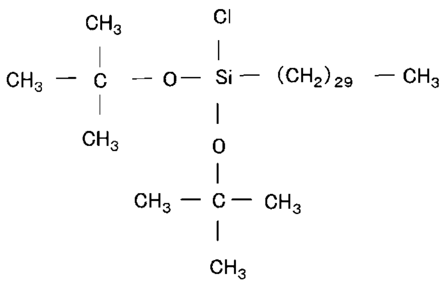

Compound 7-21

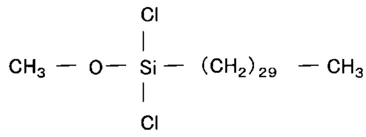

Compound 7-22

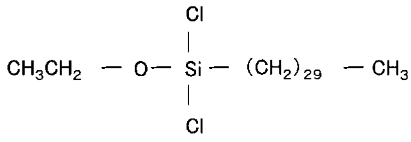

Compound 7-23

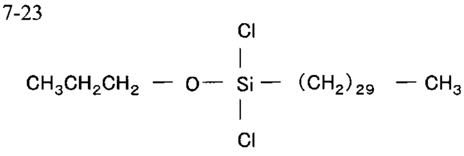

Compound 7-25

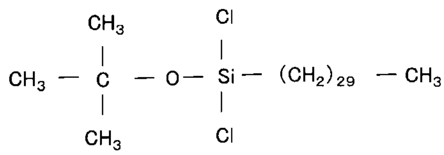

Compound 7-24

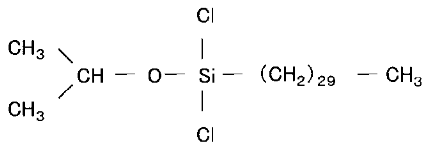

Compound 8-1

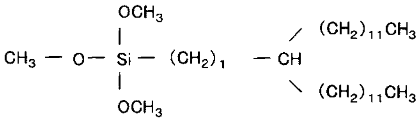

Compound 8-2

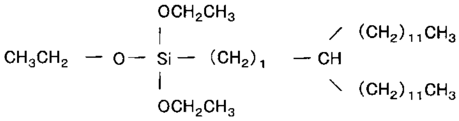

Compound 8-9

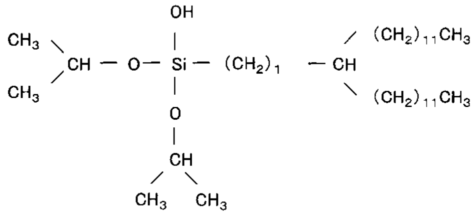

Compound 8-3

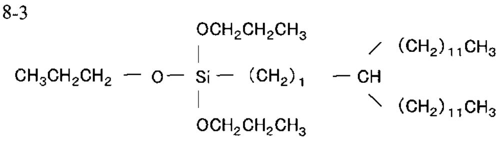

Compound 8-4

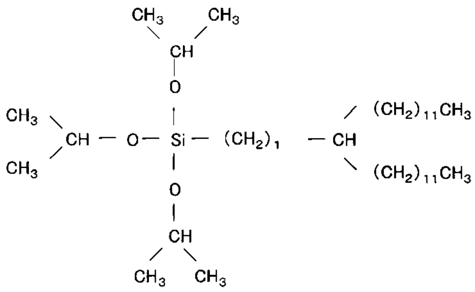

Compound 8-5

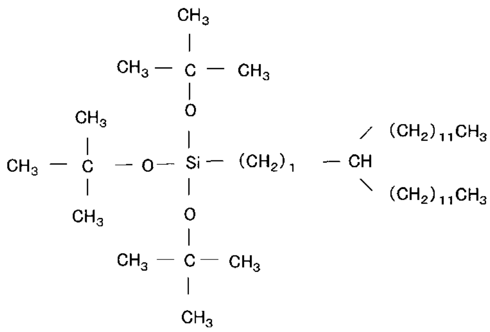

Compound 8-6

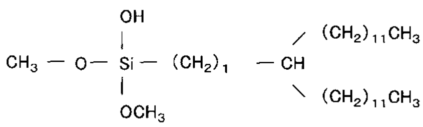

Compound 8-7

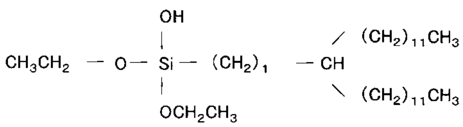

Compound 8-8

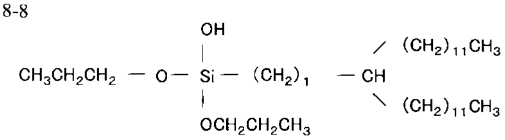

Compound 8-16

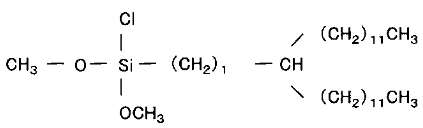

Compound 8-17

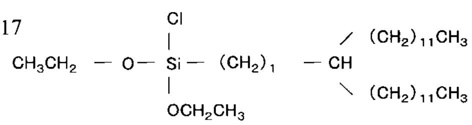

Compound 8-10

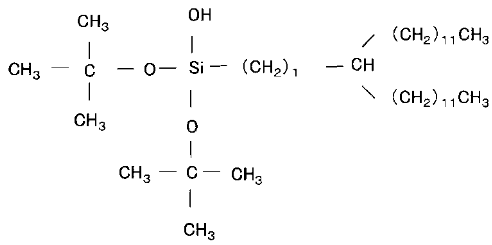

Compound 8-11

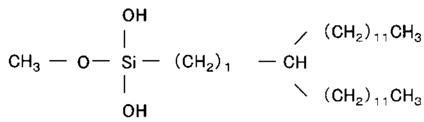

Compound 8-12

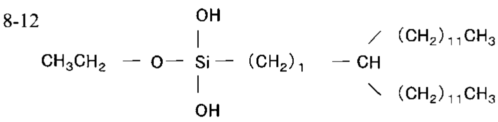

Compound 8-13

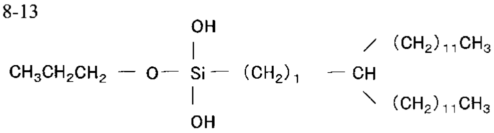

Compound 8-14

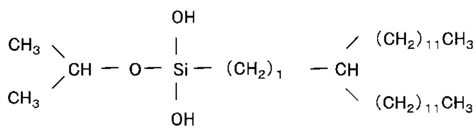

Compound 8-15

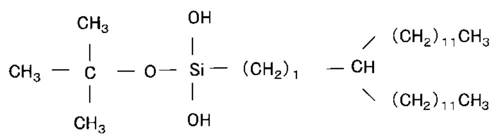

Compound 8-21

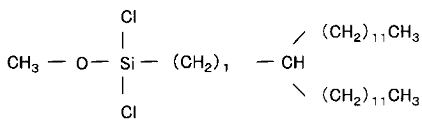

Compound 8-22

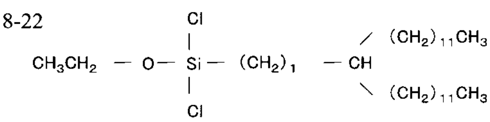

Compound 8-18

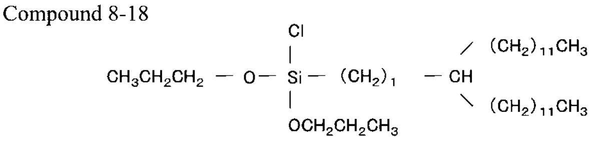

Compound 8-19

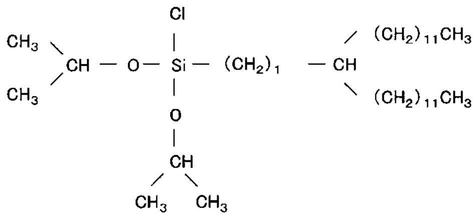

Compound 8-20

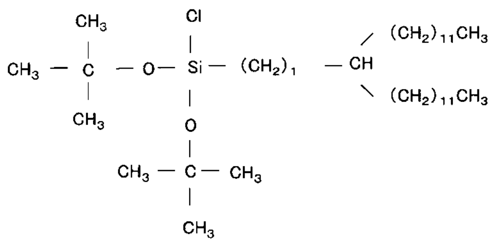

Compound 9-1

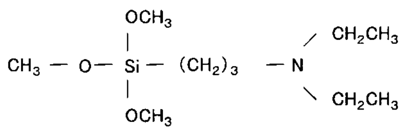

Compound 9-2

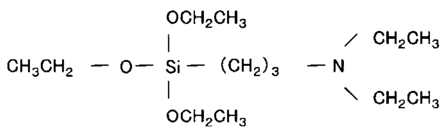

Compound 9-3

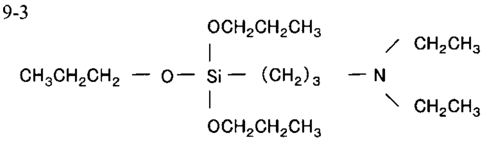

Compound 9-4

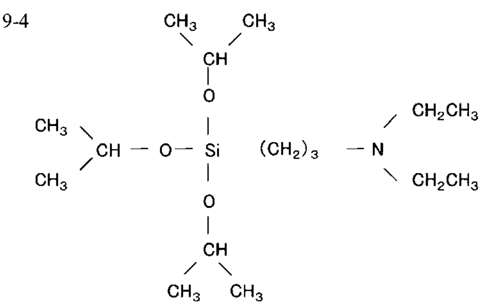

Compound 8-23

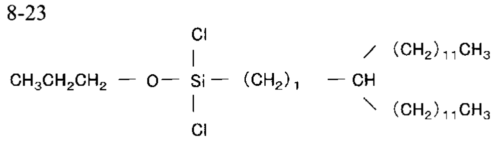

Compound 8-24

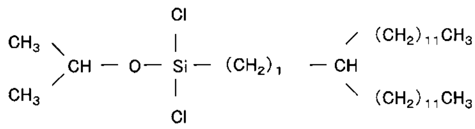

Compound 8-25

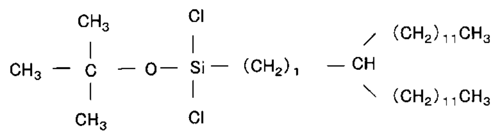

Compound 9-9

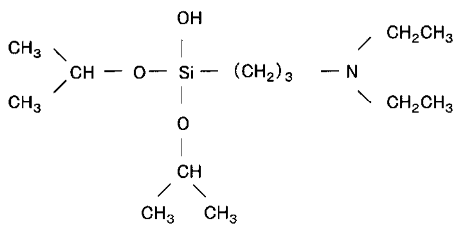

Compound 9-10

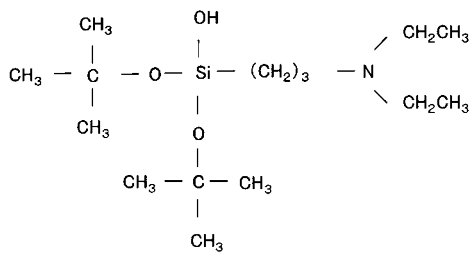

Compound 9-11

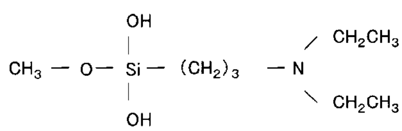

Compound 9-5

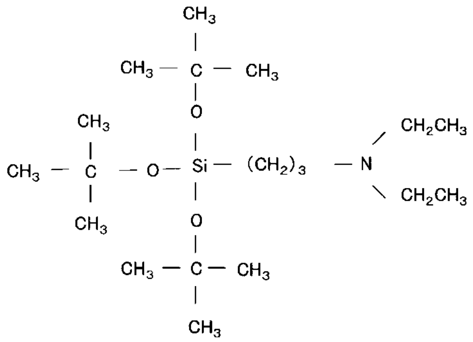

Compound 9-6

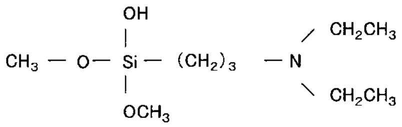

Compound 9-7

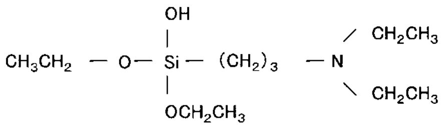

Compound 9-8

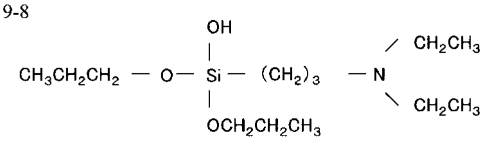

Compound 9-12

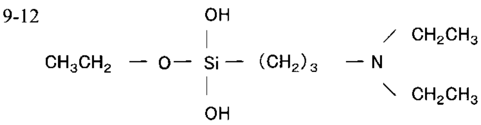

Compound 9-13

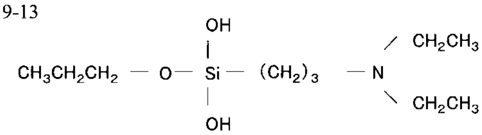

Compound 9-14

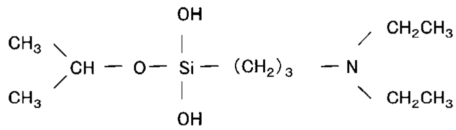

Compound 9-15

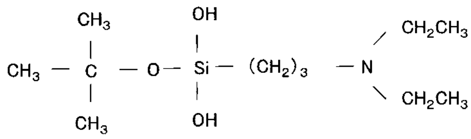

Compound 9-16

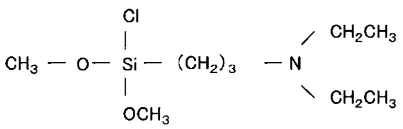

Compound 9-17

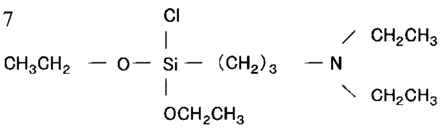

Compound 9-18

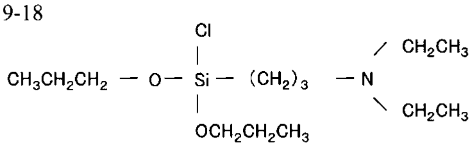

Compound 9-21

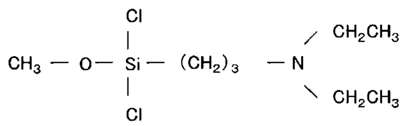

Compound 9-22

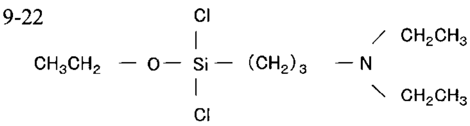

Compound 9-23

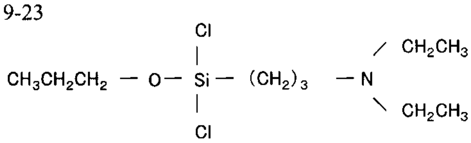

Compound 9-19

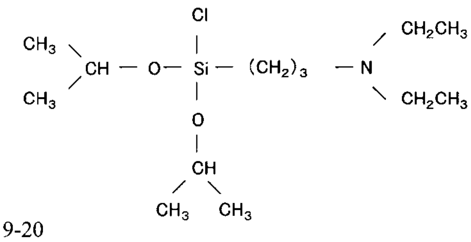

Compound 9-24

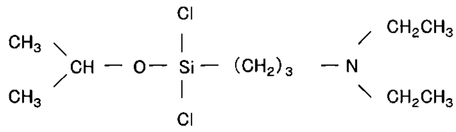

Compound 9-20

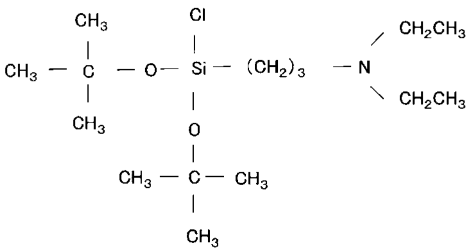

Compound 9-25

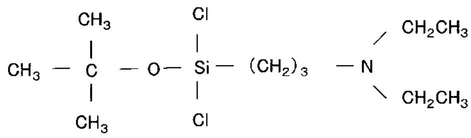

Compound 10-1

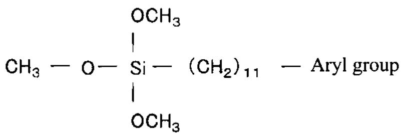

Compound 10-2

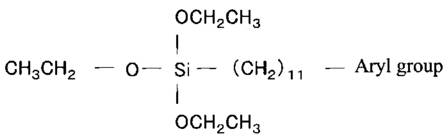

Compound 10-9

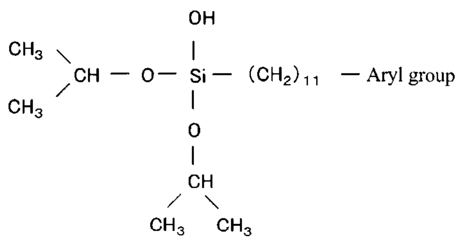

Compound 10-3

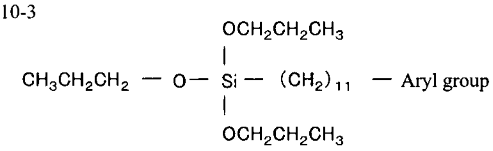

Compound 10-4

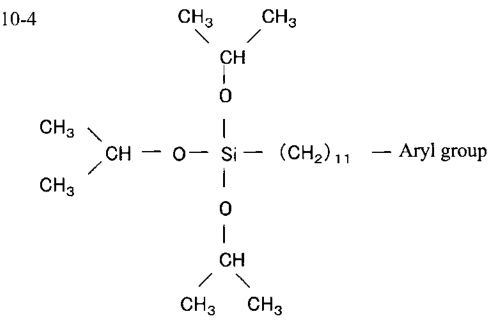

Compound 10-5

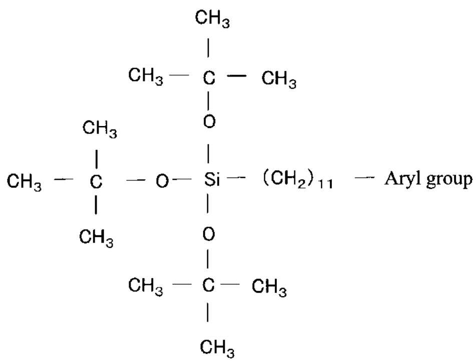

Compound 10-6

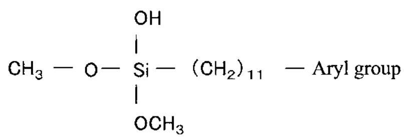

Compound 10-7

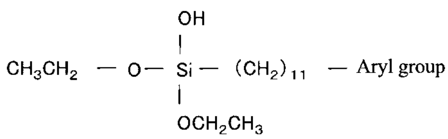

Compound 10-8

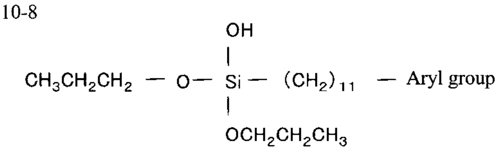

Compound 10-16

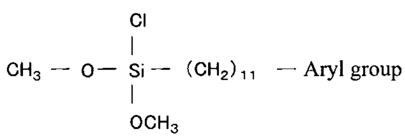

Compound 10-10

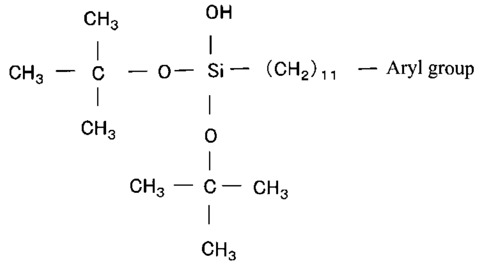

Compound 10-11

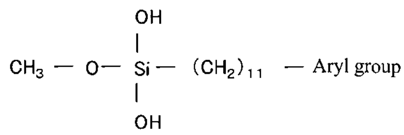

Compound 10-12

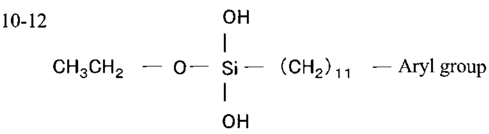

Compound 10-13

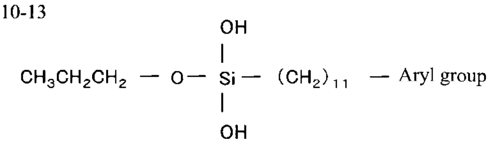

Compound 10-14

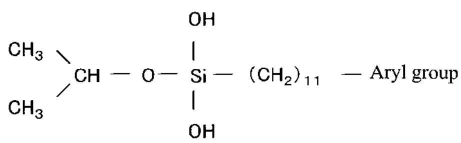

Compound 10-15

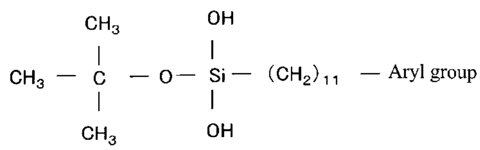

Compound 10-21

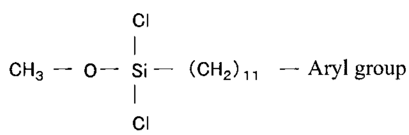

Compound 10-17

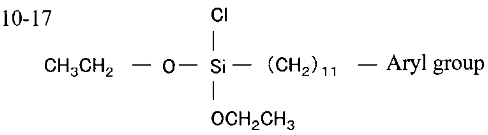

Compound 10-18

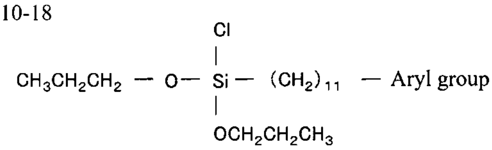

Compound 10-19

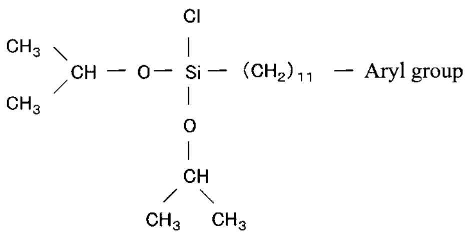

Compound 10-20

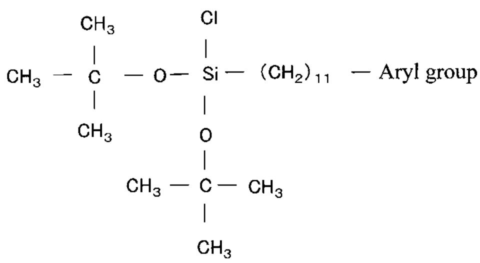

Compound 11-1

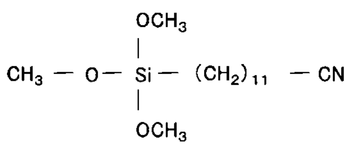

Compound 11-2

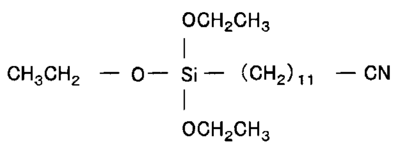

Compound 10-22

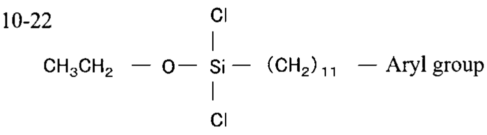

Compound 10-23

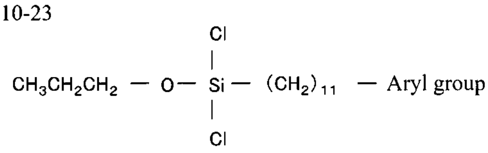

Compound 10-24

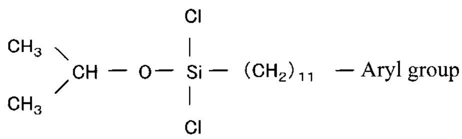

Compound 10-25

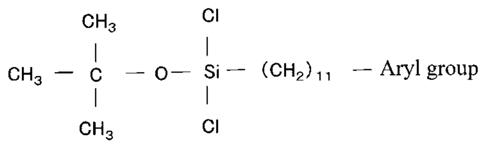

Compound 11-9

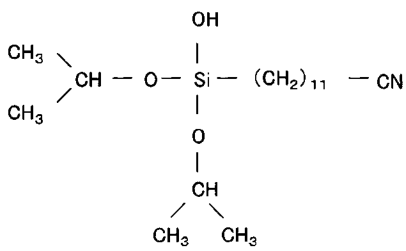

Compound 11-3

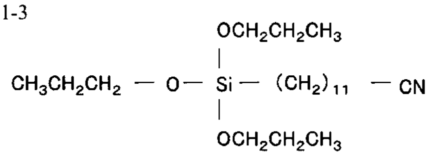

Compound 11-4

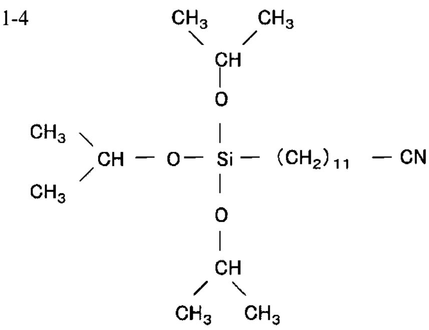

Compound 11-5

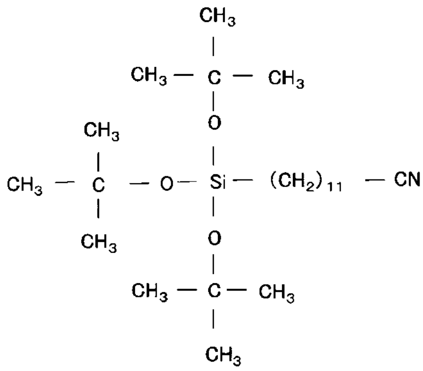

Compound 11-6

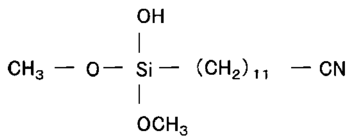

Compound 11-7

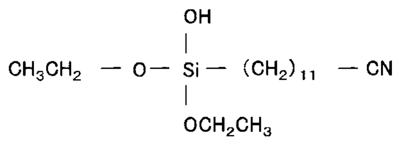

Compound 11-8

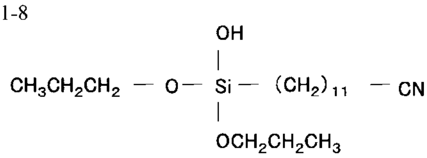

Compound 11-16

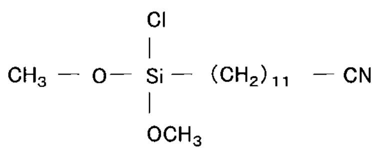

Compound 11-10

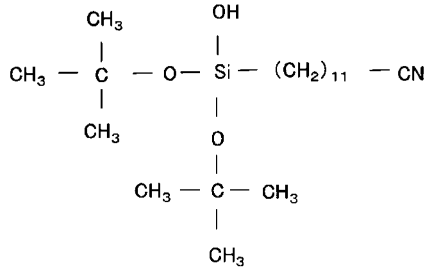

Compound 11-11

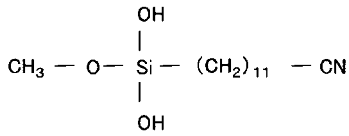

Compound 11-12

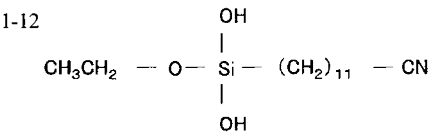

Compound 11-13

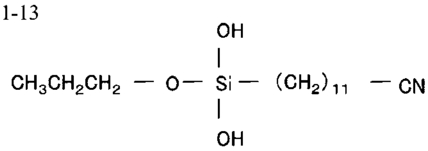

Compound 11-14

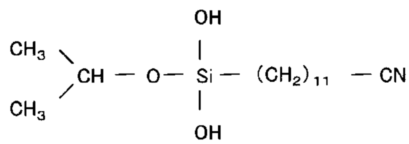

Compound 11-15

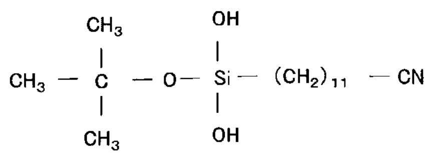

Compound 11-21

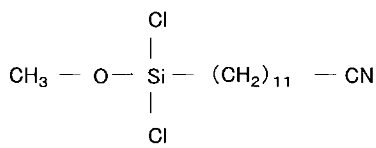

Compound 11-17

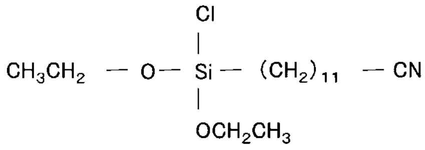

Compound 11-18

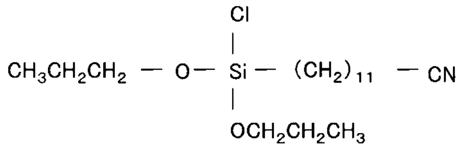

Compound 11-19

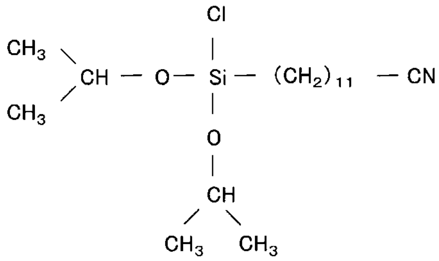

Compound 11-20

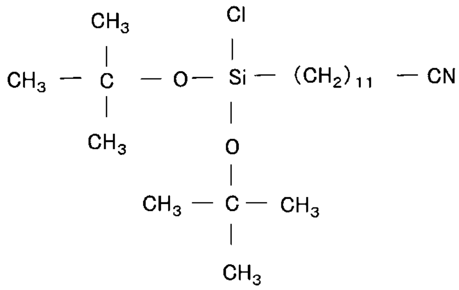

Compound 11-22

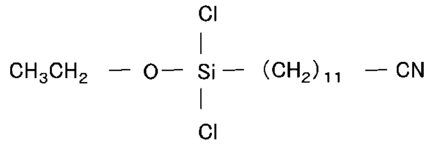

Compound 11-23

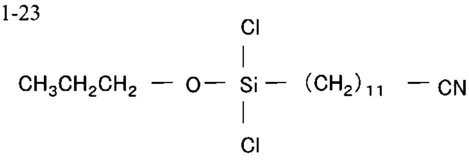

Compound 11-24

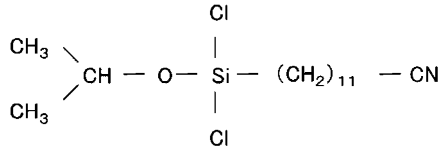

Compound 11-25

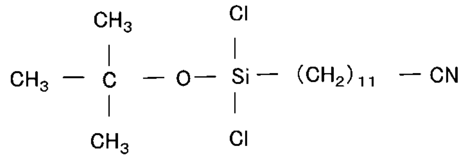

Reference can be made to the previously described explanation regarding the chemical formula (I) for other explanations.

<Chromatography Column>

Next, the chromatography column and the method for producing the chromatography column of the present disclosure will be described.

As mentioned above, the column of the present disclosure is a chromatography column packed with the packing material of the present disclosure. The column is, for example, a packed column produced by modifying silanol groups of silica gel particles or the like and then packing the silica into the column, or a capillary column produced by forming (packing) silica such as monolithic silica in a column and then modifying the silanol groups of the silica.

When the column of the present disclosure is a packed column, the column size is not particularly limited. The length of the column may be, for example, 50 mm or more, 75 mm or more, 100 mm or more, 125 mm or more, or 150 mm or more, and may be 1000 mm or less, 750 mm or less, 500 mm or less, 300 mm or less, 250 mm or less, or 200 mm or less. The internal diameter of the column may be, for example, 1.0 mm or more, 1.5 mm or more, 2.0 mm or more, 3.0 mm or more, or 4.0 mm or more, and may be 20 mm or less, 10 mm or less, 7.5 mm or less, 6.0 mm or less, or 4.5 mm or less.

When the column of the present disclosure is a capillary column, the column size is not particularly limited. The length of the column may be, for example, 150 mm or more, 250 mm or more, or 700 mm or more, and may be 5000 mm or less, 3000 mm or less, or 2000 mm or less. The internal diameter of the column may be, for example, 0.01 mm or more, 0.05 mm or more, or 0.1 mm or more, and may be 1 mm or less, 0.5 mm or less, or 0.2 mm or less. The capillary column may have

an elongated tubular shape, and for example, a groove having a size equivalent to that of a capillary tube, which is formed by microfabrication on a glass plate, may also be used as a column tube.

The silica contained in the packing material is, for example, silica gel particles or monolithic silica. The silica gel particles are, for example, silica gel particles in which silanol groups have been modified, and the monolithic silica is, for example, monolithic silica in which silanol groups have not been modified.

The column of the present disclosure is, for example, a chromatography column for plant-derived component analysis. The plant is not particularly limited, and examples thereof include Ginkgo biloba, fennel, turmeric, Corydalis, Scutellaria baicalensis, Coptis japonica, Curcuma zedoaria, licorice, cinnamon, Cyperi Rhizoma, Magnolia officinalis, Cornus officinalis, Dioscorea Rhizome, Rehmannia Root, Lithospermum Root, peony, cardamom, ginger, dried ginger, Cnidium Rhizome, Swertia Herb, Atractylodes Lancea Rhizome, Perilla Herb, rhubarb, jujube, Alisma Rhizome, clove, Citrus Unshiu Peel, Japanese angelica root, Eucommia bark, ginseng (Korean ginseng), Pinellia Tuber, Poria sclerotium, processed aconite root, Moutan Bark, Alpinia officinarum, Korean ginseng, and other crude drugs listed in the Japanese Pharmacopoeia; Chinese medicines listed in ISO/TR 23022-2018 Traditional Chinese medicine; tea leaves such as green tea leaves, leaves used to make matcha, and black tea leaves; and foods such as coffee beans, sesame, onion, yuzu, mandarin orange, bell pepper, chrysanthemum greens, perilla, grape, blueberry, spinach, and broccoli. The plant-derived components contain, for example, at least one compound selected from the group consisting of a hydrophilic compound and an amphiphilic compound, and may contain, for example, a hydrophobic compound. The plant-derived components are not particularly limited, and examples thereof include phenols and their glycosides, coumarins and their glycosides, flavonoids and their glycosides, chalcones and their glycosides, anthocyanidins and their glycosides, anthraquinones and their glycosides, indoles and their glycosides, nitriles and their glycosides, steroids and their glycosides, alkaloids and their glycosides, and compounds having structures containing these.

Next, the method for producing the chromatography column of the present disclosure will be described. As described above, the method for producing the chromatography column of the present disclosure includes modifying and packing. When the column of the present disclosure is a packed column, in the method for producing the chromatography column of the present disclosure, for example, the packing may be performed after the modifying. When the column of the present disclosure is a capillary column, in the method for producing the chromatography column of the present disclosure, for example, the modifying may be performed after the packing. The method for producing the chromatography column of the present disclosure may further include drying. The modifying may include, for example, heating, reaction reagent washing, substituting, and substitution reagent washing, which are described below.

The column of the present disclosure can be produced, for example, by the following method.

First, a column in which silica is formed in advance (hereinafter, may be simply referred to as "column before modification") is dried, or silica is dried before being packed into the column (drying). The silica may be, for example, monolithic silica or silica gel particles. In the drying, for example, moisture present on the surface of the silica is removed. The drying may be, for example, heat drying, reduced pressure drying, or heat drying under reduced pressure. The reduced pressure condition during the drying may be, for example, 1 kPa or more, 5 kPa or more, or 10 kPa or more, and 100 kPa or less, 80 kPa or less, or 50 kPa or less. The heating temperature during the drying may be, for example, 80°C or more, 100°C or more, or 120°C or more, and may be 300°C or less, 200°C or less, or 150°C or less. The drying time may be, for example, 1 hour or more, 2 hours or more, or 5 hours or more, and may be 24 hours or less, 18 hours or less, or 12 hours or less.

Next, in the case of a capillary column, the dried unmodified column is connected to a liquid delivery apparatus and heated while delivering a reaction reagent (heating). In the heating, the silica is modified with the reaction reagent. The heating temperature during the modification may be, for example, 60°C or more, 80°C or more, or 100°C or more, and may be 200°C or less, 180°C or less, or 150°C or less. The heating time during the modification may be, for example, 3 hours or more, 6 hours or more, or 10 hours or more, and may be 48 hours or less, 36 hours or less, or 24 hours or less.

The liquid delivery apparatus is, for example, a device configured to deliver the reaction reagent into the column by pressurization, and examples thereof include a syringe pump and a liquid chromatography pump. The aforementioned liquid delivery may be, for example, liquid delivery by gas pressurization.

Next, in the case of a packed column, the silica gel particles are dried under the above conditions, weighed into a flask or the like, and then modified with a reaction reagent. The amount of the reaction reagent may be, for example, any amount in the range from 10 wt% to 500 wt% with respect to 100 wt% of silica gel. The heating temperature and heating time during modification with the reaction reagent are the same as the heating temperature and heating time in the heating in the capillary column. After the modified silica gel is filtered and washed by a known method, the silica gel is packed into a column tube, thereby obtaining the packed column.

As described above, a reaction reagent represented by the following chemical formula (II) can be used as the reaction reagent.

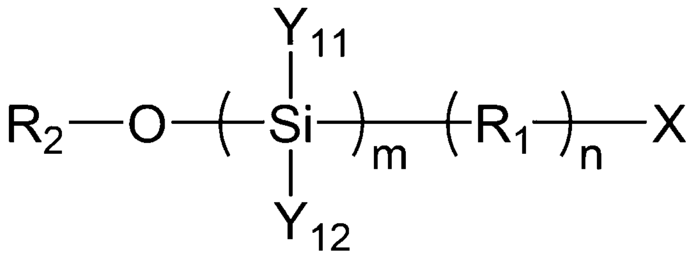

(II)

In the chemical formula (II), m is an integer of 1 or more, and may be, for example, 10 or less, 5 or less, 3 or less, or 2 or less, and is preferably 1.

In the chemical formula (II), n is 0 or a positive integer, and may be, for example, 1 or more, 2 or more, 3 or more, 4 or more, 5 or more, 7 or more, 9 or more, 11 or more, 13 or more, 15 or more, or 17 or more, and may be 29 or less, 27 or less, 25 or less, 23 or less, 21 or less, or 19 or less. The n may be, for example, 0 to 29, 0 to 3, or 2 to 3.

In the chemical formula (II), X is a methyl group, a linear or branched alkyl group, an amino group, an amido group, a cyano group, an aryl group, an alkylaryl group, a carboxy group, or a carbamoyl group. Further, optionally, at least one hydrogen atom of the alkyl group, amino group, aryl group, alkylaryl group, carboxy group, or carbamoyl group is substituted with a substituent, and when substituted with a substituent, the substituent may be, for example, a non-aromatic hydrocarbon group (which may be linear or branched, saturated or unsaturated, and optionally has a cyclic structure), an aromatic group (which may be an aromatic group containing no heteroatom (aryl group) or a heteroaromatic group containing heteroatom (heteroaryl group), and may be a monocyclic or condensed ring), a halogen, an amino group, a nitro group, a sulfo group, or a cyano group, and further, at least one hydrogen atom of each substituent is optionally substituted with any other substituent.

For X, the linear or branched alkyl group is, for example, a linear or branched alkyl group having 1 or more, 4 or more, 5 or more, 8 or more, or 10 or more carbon atoms and having 30 or less, 24 or less, 18 or less, or 12 or less carbon atoms.

In the chemical formula (II), at least one of $Y_{11}$ or $Y_{12}$ is a functional group capable of forming a silanol group. For example, at least one of $Y_{11}$ or $Y_{12}$ is a linear or branched alkoxy group, a halogen atom, or a hydrophilic group, and further, at least one hydrogen atom of the alkoxy group is optionally substituted with a substituent. When substituted with a substituent, the substituent may be, for example, a non-aromatic hydrocarbon group (which may be linear or branched, saturated or unsaturated, and optionally has a cyclic structure), an aromatic group (which may be aromatic group containing no heteroatom (aryl group) or heteroaromatic group containing heteroatom (heteroaryl group), and may be a monocyclic or condensed ring), a halogen, an amino group, a nitro group, a sulfo group, or a cyano group, and further, at least one hydrogen atom of each substituent is optionally substituted with any other substituent. The linear or branched alkoxy group is, for example, a linear or branched alkoxy group having 1 or more, 3 or more, or 5 or more carbon atoms and having 10 or less, 8 or less, or 6 or less carbon atoms. Examples of the linear or branched alkoxy group include a methoxy group, an ethoxy group, a propoxy group, an isopropoxy group, an n-butoxy group, an isobutoxy group, a sec-butoxy group, and a tert-butoxy group. Examples of the halogen atom include a fluorine atom, a chlorine atom, a bromine atom, and an iodine atom. Examples of the hydrophilic group include a hydroxy group, a carboxy group, an amino group, a dimethylamino group, and a diethylamino group, which may be in an ionized form such as $-O^-$, $-COO^-$, or $-NH_3^+$. Examples of the hydrophobic group include a methyl group, a linear or branched alkyl group, an alkenyl group, an aryl group, an alkylaryl group, and a polycyclic aryl group. Further, at least one hydrogen atom of each substituent is optionally substituted with any other substituent. $Y_{11}$ and $Y_{12}$ may be identical to or different from each other.

In the chemical formula (II), $R_1$ is a methylene group, and further, at least one hydrogen atom of the methylene group is optionally substituted with a substituent, and is preferably unsubstituted. When substituted with a substituent, the substituent is preferably substituted with, for example, a hydrophobic functional group.

In the chemical formula (II), $R_2$ is a methyl group or a linear or branched alkyl group, and further, at least one hydrogen atom of the alkyl group is optionally substituted with a substituent. When substituted with a substituent, the substituent may be, for example, a non-aromatic hydrocarbon group (which may be linear or branched, saturated or unsaturated, and optionally has a cyclic structure), an aromatic group (which may be an aromatic group containing no heteroatom (aryl group) or a heteroaromatic group containing heteroatom (heteroaryl group), and may be a monocyclic or condensed ring), a halogen, an amino group, a nitro group, a sulfo group, or a cyano group, and further, at least one hydrogen atom of each substituent is optionally substituted with any other substituent. Examples of the linear or branched alkyl group include a linear or branched alkyl group having 1 to 12 carbon atoms, such as a methyl group, an ethyl group, a

propyl group, an n-butyl group, an iso-butyl group, a sec-butyl group, a tert-butyl group, a pentyl group, a hexyl group, a heptyl group, an octyl group, a nonyl group, a decyl group, an undecyl group, and a dodecyl (lauryl) group.

When the silica is modified with a reaction reagent represented by the chemical formula (II), for example, the modification is performed by a condensation reaction between $R_2O$- in the chemical formula (II) and a silanol group of the silica.

Examples of the reaction reagent include the compounds 1-1 to 11-25 described above.

The reaction reagent optionally has other components, for example. Examples of the other component include solvents and catalysts. Examples of the solvent include water; alcohols such as methanol, ethanol, isopropyl alcohol (IPA), n-butyl alcohol, sec-butyl alcohol, isobutyl alcohol, and t-butyl alcohol (TBA); ketones such as acetone, methyl ethyl ketone, methyl isobutyl ketone, and cyclopentanone; esters such as methyl acetate, ethyl acetate, and butyl acetate; ethers such as diisopropyl ether, propylene glycol monomethyl ether, 2-methoxyethanol, ethyl cellosolve, and butyl cellosolve; glycols such as ethylene glycol and propylene glycol; aliphatic hydrocarbons such as hexane, heptane, and octane; aromatic hydrocarbons such as benzene, toluene, and xylene; and nitriles such as acetonitrile. The catalyst may be, for example, amine catalysts. Examples of the amine catalyst include diethylamine, triethylamine, diisopropylethylamine, phenethylamine, pyridine, lutidine, 4-dimethylaminopyridine, phenethylamine, piperidine, morpholine, and 1,4-diazabicyclo[2.2.2]octane.

The method for producing the chromatography column of the present disclosure may include washing unreacted reaction reagent (reaction reagent washing) after the heating. The reaction reagent washing is, for example, delivering a solvent into the column after the heating. The solvent is, for example, the same as the solvent contained as the other component. The delivery time is not particularly limited as long as it is sufficient to wash away the unreacted reaction reagent, and is, for example, 1 hour or more, 6 hours or more, or 12 hours or more, and 72 hours or less, 48 hours or less, or 24 hours or less.

When $Y_{11}$ and $Y_{12}$ in the chemical formula (II) contain, for example, groups other than hydrophilic groups, the method for producing the chromatography column of the present disclosure may further include substituting the groups other than hydrophilic groups with hydrophilic groups (substitution). The substitution is, for example, further hydrolyzing the silica after the modification, and may be substitution of at least one of $Y_{11}$ or $Y_{12}$ in the chemical formula (II) bonded to the modified silica with a hydroxyl group (i.e., silanol group formation).

The substitution is, for example, delivering a substitution reagent into the column after the heating. The substitution reagent may contain, for example, a solvent, an acid, and the like. The solvent is, for example, the same as the solvent contained as the other component. The acid may be, for example, an organic acid or an inorganic acid. The organic acid is not particularly limited, and examples thereof include acetic acid, formic acid, difluoroacetic acid, and trifluoroacetic acid. Examples of the inorganic acid include sulfuric acid, phosphoric acid, hydrofluoric acid, hydrochloric acid, hydrobromic acid, hydroiodic acid, hypofluorous acid, hypochlorous acid, hypobromous acid, hypoiodous acid, fluorous acid, chlorous acid, bromous acid, iodous acid, fluoric acid, chloric acid, bromic acid, iodic acid, perfluoric acid, perchloric acid, perbromic acid, and periodic acid. The pH of the substitution reagent is, for example, preferably acidic, and is pH 4 or less, pH 3 or less, pH 2 or less, or pH 1 or less.

The temperature in the substitution is, for example, 20°C or more, 40°C or more, or 60°C or more, and 120°C or less, 100°C or less, or 80°C or less. The liquid delivery time in the liquid delivery is not particularly limited as long as it is a time during which groups other than hydrophilic groups can be substituted with hydrophilic groups, and is, for example, 1 hour or more, 3 hours or more, or 6 hours or more, and 48 hours or less, 24 hours or less, or 12 hours or less.

The method for producing the chromatography column of the present disclosure may further include washing after the substitution (substitution reagent washing). The substitution reagent washing is, for example, delivering a solvent into the column after the substitution. The solvent is, for example, the same as the solvent contained as the other component. The liquid delivery time is not particularly limited as long as the unreacted reaction reagent can be washed away, and is, for example, 1 hour or more, 3 hours or more, or 6 hours or more, and 48 hours or less, 24 hours or less, or 12 hours or less.

<Chromatography Analysis Apparatus>

Next, the chromatography analysis apparatus (also referred to as a "chromatograph") of the present disclosure will be described.

The chromatography analysis apparatus may be, for example, a liquid chromatography analysis apparatus. The liquid chromatography analysis apparatus includes, for example, a liquid delivery part, a gradient elution part, a sample injection part (injector), a detection part, and a data processing part. The analytical column is preferably connected to, for example, any position between the sample injection part and the detection part. The gradient elution part is preferably connected to, for example, any position between the liquid delivery part and the sample injection part.

The number of the analytical columns is not particularly limited, and may be determined in consideration of, for example, analysis conditions, and one analytical column may be used, or two or more analytical columns may be used.

The eluent is, for example, a three or more-component eluent combining water and two or more types of water-soluble organic solvents. The types of the water-soluble organic solvent may be, for example, two or more, three or more, four or more, or five or more, and may be eight or less, seven or less, or six or less. The number of components of the eluent varies depending on the number of solvents to be combined, and it is preferably three or more. Examples of the water-soluble organic solvent include alcohol-based solvents and nitrile-based solvents. The water-soluble organic solvent may include, for example, at least one solvent selected from the group consisting of the alcohol-based solvent and the nitrile-based solvent. Examples of the alcohol solvent include methanol, ethanol, isopropyl alcohol (IPA), n-propyl alcohol, n-butyl alcohol, sec-butyl alcohol, isobutyl alcohol, t-butyl alcohol (TBA), and 2-methoxyethanol, with methanol being preferable. The nitrile-based solvent may be, for example, acetonitrile.

The gradient elution part performs, for example, gradient elution by using the eluent as a mobile phase to change a solvent composition of the eluent. The solvent composition of the eluent may, for example, be gradient-eluted at a flow rate of 20 nL to 100 mL/min, 100 nL to 1 mL/min, or 300 nL to 0.01 mL/min. In addition, in the case of a three or more-component eluent, gradient elution may be performed by changing the solvent composition of at least one component of the eluent from the start to the end of elution, for example, from 0 to 100%, 10 to 90%, or 20 to 80%.

The chromatography analysis apparatus of the present disclosure may further include, for example, another analysis apparatus such as a mass spectrometer. For example, the other analysis apparatus may be integrated with the analysis apparatus of the present disclosure, or each may be provided as a separate unit connected for use.

<Analysis Method>

Next, the analysis method of the present disclosure will be described.

As described above, the analysis method of the present disclosure is an analysis method using the analysis apparatus of the present disclosure.

The analysis method of the present disclosure is, for example, a method for analyzing an analyte containing at least one compound selected from the group consisting of a hydrophilic compound and an amphiphilic compound. The analysis method of the present disclosure is, for example, a method for analyzing plant-derived components. Examples of the plant and the plant-derived components are the same as those described for the column of the present disclosure.

Examples

Next, examples of the present disclosure will be described. The present disclosure, however, is not limited to the following examples.

<Quantitation of Hydrophilic Group>

Example 1

As Example 1, a chromatography column 1 (hereinafter may be referred to as the "column 1") packed with the chromatography column packing material of the present disclosure was produced.

First, a monolithic silica capillary (inside diameter: 0.1 mm, length: 750 mm, produced by Shinwa Chemical Industries Ltd.) were dried under reduced pressure at 140°C for 6 hours. Next, the dried monolithic silica capillary was connected to a liquid delivery apparatus (pump) including a heating furnace, and the reaction was performed at 100°C while delivering the reaction reagent to the monolithic silica capillary. The reaction reagent was a mixture of 23 mL of toluene, 2 mL of toluene solution containing 10 vol% of phenethylamine acting as a catalyst, and 2 mL of octadecyltriethoxysilane. The delivery time of the reaction reagent was 40 hours. Thereafter, in order to remove the unreacted reaction reagent by washing, toluene was delivered at room temperature for 24 hours. Next, under the condition of 60°C, a substitution reagent was delivered to the monolithic silica capillary after the reaction, and the unreacted leaving group of the octadecyltriethoxysilane after the reaction was hydrolyzed to obtain a silanol group. The substitution reagent was a mixture of 80 mL of acetonitrile, 20 mL of ultrapure water, and 0.1 mL of formic acid, and had a pH of approximately 2. The delivery time of the substitution reagent was 20 hours. Finally, in order to remove the substitution reagent by washing, methanol as an organic solvent was delivered at room temperature for 24 hours to produce a column 1. The column 1 was cut at the end to achieve a length of 700 mm.

The $\alpha$ (methylene group selectivity) of the column 1 was measured by high performance liquid chromatography (HPLC). The HPLC conditions were set as follows. Uracil, butylbenzene, and amylbenzene were used as samples, and their concentrations were 0.05 mg/mL, 0.5 $\mu$L/mL, and 0.5 $\mu$L/mL, respectively. Using the uracil peak as $t_0$ and the butylbenzene and amylbenzene peaks as $t_R$ respectively, the $\alpha$ value of the column 1 and the ratio (%) of silanol groups remaining on the silica surface after the modification reaction were calculated from the aforementioned equations (1) to (5). The results are shown in Table 1 below.

(HPLC Measurement Conditions)

Equipment: high-performance liquid chromatograph (JASCO Corporation)
Mobile phase: water/methanol = 20/80 (v/v) mixed solvent
Column flow rate: 0.5 μL/min
Elution condition: isocratic
Column temperature: 30°C
Detection wavelength: 220 nm

[Examples 2 to 14 and Comparative Example 1]

As Examples 2 to 14 and Comparative Example 1, chromatography columns 2 to 14 (hereinafter sometimes referred to as the "columns 2 to 14") containing the chromatography column packing material of the present disclosure and a chromatography column for comparison (hereinafter sometimes referred to as the "column 15") were produced. In Examples 2 to 14, the columns 2 to 14 were produced in the same manner as in Example 1 except that the liquid delivery time of the reaction reagent was changed to the time summarized in Table 1 below.

In Comparative Example 1, the column (column 15) was produced in the same manner as in Example 1 except that a mixture of 9 mL of toluene and 1 mL of octadecyldimethyl(dimethylamino)silane was used as the reaction reagent instead of the reaction reagent used in Example 1.

[Table 1]

| | Reaction reagent delivery time (hour) | Methylene group selectivity α | Ratio of silanol groups remaining on silica surface after modification reaction (mol%) |
|---|---|---|---|
| Example 1 (column 1) | 40 | 1.400 | 119.6 |
| Example 2 (column 2) | 15 | 1.373 | 115.2 |
| Example 3 (column 3) | 15 | 1.379 | 116.2 |
| Example 4 (column 4) | 15 | 1.382 | 116.7 |
| Example 5 (column 5) | 40 | 1.410 | 121.2 |
| Example 6 (column 6) | 40 | 1.413 | 121.7 |
| Example 7 (column 7) | 40 | 1.436 | 125.4 |
| Example 8 (column 8) | 40 | 1.447 | 127.2 |
| Example 9 (column 9) | 63 | 1.447 | 127.2 |
| Example 10 (column 10) | 63 | 1.453 | 128.2 |
| Example 11 (column 11) | 87 | 1.457 | 128.8 |
| Example 12 (column 12) | 87 | 1.458 | 129.0 |
| Example 13 (column 13) | 120 | 1.430 | 124.5 |
| Example 14 (column 14) | 120 | 1.478 | 132.3 |
| Comparative Example 1 (column 15) | 40 | 1.530 | 59.4 |

As summarized in Table 1, in the columns 1 to 14, the silanol groups of silica contained in the packing material were modified with substituents containing hydrophilic groups (silanol groups), and the ratio of silanol groups remaining on the silica surface after the modification reaction was 100 mol% or more. On the other hand, in the column 15, the silanol groups of silica contained in the packing material were modified with substituents containing no hydrophilic group (silanol group), and the ratio of silanol groups remaining on the silica surface after the modification reaction was less than 100 mol%.

Here, FIG. 1 is a diagram in which, for columns 1 to 15, methylene group selectivity α is plotted on the vertical axis, and the delivery time (reaction time) of the reaction reagent is plotted on the horizontal axis. As shown in FIG. 1, it was found

that the value of α changed from 1.30 to 1.40 when the liquid delivery time of the reaction reagent containing octadecyltriethoxysilane was in the range from 15 hours to 40 hours, and, columns with α values in the range from 1.40 to 1.48 could be stably produced when the liquid delivery time of the reaction reagent containing octadecyltriethoxysilane exceeded 40 hours.

In addition, for the packing material before modification (untreated silica), the column 1 (Example 1), and the column 15 (Comparative Example 1), the hydrophilic groups (silanol groups) of the packing material before and after modification were quantified. For the quantification, a scanning electron microscope coupled with energy dispersive X-ray spectrometer (produced by JEOL Ltd., trade name: JSM-7100) was used. The results are summarized in Table 2 below.

[Table 2]

| Type of silica column | Atomic ratio |
|---|---|
| | O/Si |
| Untreated silica | 2.009 |
| Column 1 | 2.061 |
| Column 15 | 1.915 |

It was found that the untreated silica had an atomic ratio of oxygen atoms (O) to silicon atoms (Si) (hereinafter referred to as the "O/Si ratio") of approximately 2, i.e., had a $SiO_2$ structure. In this regard, the packing material in the column 1 had an increased O/Si ratio compared to the untreated silica. That is, it was found that the amount of hydroxyl groups increased in the column 1. On the other hand, the packing material of the column 15 had a decreased O/Si ratio compared to the untreated silica. That is, it was found that the amount of hydroxyl groups decreased in the column 15.

<Separation of Components Contained in Black Tea>

On the basis of the following procedures and conditions, components contained in black tea (Darjeeling) were separated using the column 1 and the column 15.

(Preparation of Analytical Sample)

First, 10 mg of tea leaves from a commercially available Darjeeling tea bag was taken in a sample tube, and a 50/50 (v/v) mixed solvent of water/methanol was added so as to be 10 mg/mL, and stirred using a vortex mixer for 10 seconds. After stirring, it was allowed to stand for 10 minutes. 50 μL of the supernatant after being allowed to stand and 950 μL of 0.2 vol% phosphoric acid-added aqueous solution were added to a 2 mL sample bottle, which was then shaken to obtain a 0.5 mg/mL analytical sample.

(HPLC Measurement Conditions)

Equipment: high-performance liquid chromatograph (Thermo Fisher Scientific)
Mobile phase A: 0.2 vol% phosphoric acid-added aqueous solution
Mobile phase B: 0.2 vol% phosphoric acid-added methanol
Pump flow rate: 0.5 μL/min
Elution condition: 5% B to 50% B (90 min), 50% B to 95% B (1 min), 95% B (9 min)
Column temperature: 50°C
Detection wavelength: 203 nm
Sample concentration: 0.5 mg/mL
Sample injection volume: 1 μL

FIG. 2 shows chromatograms when components contained in black tea (Darjeeling) were separated using the column 1 and the column 15. In FIG. 2, the vertical axis represents the detection value (mAU), and the horizontal axis represents the elution time (min).

As shown in FIG. 2, when the column 1 was used, peaks of components contained in black tea were detected in a wide range. That is, the column 1 containing the chromatography column packing material of the present disclosure was able to widely adsorb and separate components of black tea. On the other hand, the column 15 showed weak adsorption of

components contained in black tea, and they were eluted at an early time. Thus, it was found that the column 1 having a large number of silanol groups remaining on the silica surface of the chromatography column packing material was suitable for retention and separation of plant components.

<Separation of Components Contained in Teas>

On the basis of the following procedures and conditions, components contained in teas were separated using the column 1.

(Preparation of Analytical Sample)

The analytical samples were prepared following the same procedure as the above-described "Separation of Components Contained in Black Tea" except that commercially available tea bags of Earl Grey, green tea, hojicha, and amacha were used instead of Darjeeling leaves. Analytical samples of 0.5 mg/mL were obtained for five kinds of teas (Darjeeling, Earl Grey, green tea, hojicha, and amacha).

(HPLC Measurement Conditions)

The measurement conditions were the same as in "Separation of Components Contained in Black Tea" described above.

FIG. 3 shows chromatograms when components contained in five kinds of teas (Darjeeling, Earl Grey, green tea, hojicha, and amacha) were separated using the column 1. In each of the chromatograms of FIG. 3, the vertical axis represents the detection value (mAU), and the horizontal axis represents the elution time (min).

As shown in FIG. 3, many large and small peaks were detected in each of the analytical samples. Furthermore, it was shown that the patterns of components contained in Darjeeling, Earl Grey, green tea, and hojicha produced from the same tea leaves were different. Moreover, amacha, which is made from tea leaves different from the other four teas, showed a different component pattern from the other four teas. As described above, it was found that the column containing the chromatography column packing material of the present disclosure can effectively adsorb and separate plant components and precisely separate them, and thus is useful for precise analysis and pattern analysis of plant components.

<Difference in Separation Ability with Mixed Mobile Phase>

On the basis of the following procedures and conditions, components contained in black tea (Darjeeling) were separated using the column 1, and a change in separation ability when using the mixed mobile phase was examined.

(Analytical Sample Preparation)

An analytical sample was prepared in the same manner as in the aforementioned

"Separation of Components Contained in Black Tea" to obtain an analytical sample of 0.5 mg/mL.
(HPLC Measurement Conditions)
Equipment: high-performance liquid chromatograph (Thermo Fisher Scientific)
Mobile phase A: 0.2 vol% phosphoric acid-added aqueous solution
Mobile phase B:

Condition 1: 0.2 vol% phosphoric acid-added methanol
Condition 2: 0.2 vol% phosphoric acid-added methanol/acetonitrile = 60/40 (v/v) mixed solvent Pump flow rate: 0.5 μL/min

Elution condition: 5% B to 50% B (90 min), 50% B to 95% B (1 min), 95% B (9 min)
Column temperature: 50°C
Detection wavelength: 203 nm
Sample concentration: 0.5 mg/mL
Sample injection volume: 1 μL

FIG. 4 shows chromatograms comparing the difference in separation ability based on the difference in mobile phases when the components contained in black tea (Darjeeling) were separated using the column 1. In each of the

chromatograms of FIG. 4, the vertical axis represents the detection value (mAU), and the horizontal axis represents the elution time (min).

As shown in FIG. 4, the number of detected peaks was 62 in the gradient elution (condition 1) with a two-component solvent of water and methanol widely used in general HPLC. On the other hand, the number of detected peaks was 89 in the gradient elution (condition 2) with a three-component solvent of water, methanol, and acetonitrile. That is, the column containing the chromatography column packing material of the present disclosure can effectively separate plant components by gradient elution with a two-component solvent of water and methanol, and can separate more components by gradient elution with a three-component solvent of water, methanol, and acetonitrile. This indicates that the column containing the chromatography column packing material of the present disclosure is useful for component analysis of plants containing a wide variety of components.

<Separation of Components Contained in Asparagus>

On the basis of the following procedures and conditions, components contained in asparagus were separated using the column 1.

(Preparation of Analytical Sample)

An analytical sample was prepared in the same manner as in the aforementioned "Separation of Components Contained in Black Tea" except that commercially available asparagus dried under reduced pressure at 40 °C was used instead of commercially available tea leaves of Darjeeling tea bag, and an analytical sample of 0.5 mg/mL was obtained for the dried asparagus extract.

The rutin solution used as a standard was prepared as follows. 0.1 mg of rutin (produced by FUJIFILM Wako Pure Chemical Corporation) was taken in a sample tube, a 50/50 (v/v) mixed solvent of water/methanol was added so as to be 0.1 mg/mL, and stirred using a vortex mixer for 10 seconds. After stirring, it was allowed to stand for 10 minutes. 10 μL of the supernatant after being allowed to stand and 990 μL of 0.2 vol% phosphoric acid-added aqueous solution were added to a 2 mL sample bottle, which was then shaken to obtain a 0.001 mg/mL analytical sample.

(HPLC Measurement Conditions)

Equipment: high-performance liquid chromatograph (Thermo Fisher Scientific)
Mobile phase A: 0.2 vol% phosphoric acid-added aqueous solution
Mobile phase B: 0.2 vol% phosphoric acid-added methanol/acetonitrile = 60/40 (v/v) mixed solvent
Elution condition: 5% B to 50% B (90 min), 50% B to 95% B (1 min), 95% B (9 min)
Column temperature: 50°C
Detection wavelength: 203 nm
Sample concentration: 0.5 mg/mL
Sample injection volume: 1 μL

FIG. 5 shows a chromatogram when a component (rutin) contained in asparagus was separated using the column 1. In each chromatogram of FIG. 5, the vertical axis represents the detection value (mAU), and the horizontal axis represents the elution time (min).

As shown in FIG. 5, based on the analysis result of the rutin standard, rutin, which is abundant in asparagus, was successfully identified. As described above, it was found that the column containing the chromatography column packing material of the present disclosure is useful for analysis of not only tea but also for other plant components including asparagus. In addition, it was also found that identification and quantitative analysis of plant components can be performed by using standards.

As described above, according to the column containing the chromatography column packing material of the present disclosure, it is possible to perform component analysis with higher sensitivity than a conventional column.

In addition, since plant-derived components differ for each plant and exist in many varieties, analysis with a general liquid chromatography analysis apparatus is difficult. Columns using particles employ extremely small particles for these analyses. In a column using such extremely small particles, an extraordinary ultra-high pressure of about 1000 atm is generated at the time of liquid delivery, so that a special dedicated system which can withstand use under ultra-high pressure conditions is required. However, according to the column containing the chromatography column packing material of the present disclosure, various kinds of components can be separated and analyzed even by using general liquid chromatography at about 100 atm. Therefore, for example, depending on the application, a general liquid chromatography analysis apparatus using a column containing the chromatography column packing material of the present disclosure and an ultra-high pressure liquid chromatography analysis apparatus can be complementarily used.

Furthermore, in the column containing the chromatography column packing material of the present disclosure,

for example, the amount of the solvent discharged from the column together with the separated components is small, and thus the column is suitable for connection to a mass spectrometer that requires vaporization of a sample during component analysis. Therefore, a liquid chromatography-mass spectrometer equipped with a column containing the chromatography column packing material of the present disclosure has higher sensitivity than a liquid chromatography-mass spectrometer equipped with a conventional column.

Some or all of the above embodiments and examples may be described as in the following Supplementary Notes, but are not limited thereto.

(Supplementary Note 1)

A chromatography column packing material, including:
silica having a silanol group modified with a group represented by the following chemical formula:

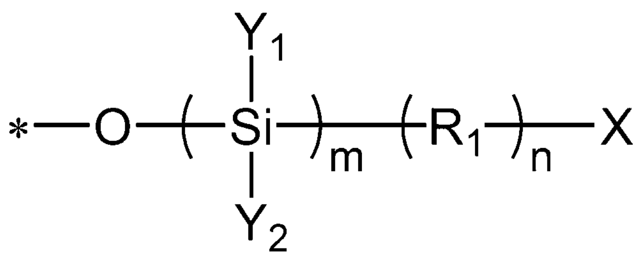

(I)

wherein in the chemical formula (I),

- $R_1$ is a methylene group, and further, at least one hydrogen atom of the methylene group is optionally substituted with a substituent,
- m is an integer of 1 or more,
- n is 0 or a positive integer,
- X is a methyl group, a linear or branched alkyl group, an amino group, an amido group, a cyano group, an aryl group, an alkylaryl group, a carboxy group, or a carbamoyl group, and further, at least one hydrogen atom of the alkyl group, the amino group, the aryl group, the alkylaryl group, the carboxy group, or the carbamoyl group is optionally substituted with a substituent,
- at least one of $Y_1$ or $Y_2$ is a hydrophilic group, and $Y_1$ and $Y_2$ may be identical to or different from each other, and
- * indicates a bonding position.

(Supplementary Note 2)

The packing material according to Supplementary Note 1, wherein
a ratio of silanol groups (a) contained in the silica after the modification to silanol groups (b) contained in the silica before the modification is 100 mol% or more.

(Supplementary Note 3)

The packing material according to Supplementary Note 1 or 2, wherein
in the chemical formula (I),
one of $Y_1$ or $Y_2$ is a hydrophobic group.

(Supplementary Note 4)

The packing material according to any one of Supplementary Notes 1 to 3, wherein
in the chemical formula (I),
in X, the linear or branched alkyl group is a linear or branched alkyl group having 1 to 30 carbon atoms.

(Supplementary Note 5)

A chromatography column packing material, including:
silica modified with a reaction reagent represented by the following chemical formula (II):

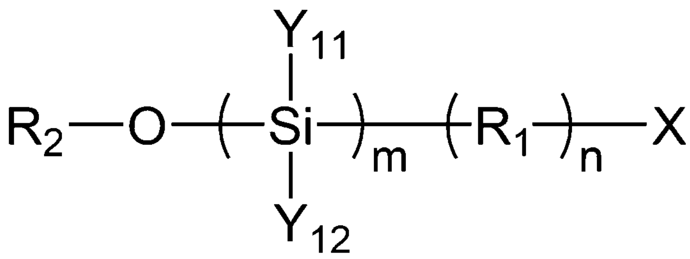

(II)

wherein in the chemical formula (II),

- $R_1$ is a methylene group, and further, at least one hydrogen atom of the methylene group is optionally substituted with a substituent,
- $R_2$ is a methyl group or a linear or branched alkyl group, and further, at least one hydrogen atom of the alkyl group is optionally substituted with a substituent,
- m is an integer of 1 or more,
- n is 0 or a positive integer,
- X is a methyl group or a linear or branched alkyl group, an amino group, an amido group, a cyano group, an aryl group, an alkylaryl group, a carboxy group, or a carbamoyl group, and further, at least one hydrogen atom of the alkyl group, the amino group, the aryl group, the alkylaryl group, the carboxy group, or the carbamoyl group is optionally substituted with a substituent, and
- at least one of $Y_{11}$ or $Y_{12}$ is a functional group capable of forming a silanol group.

(Supplementary Note 6)

A chromatography column packed with the packing material according to any one of Supplementary Notes 1 to 5.

(Supplementary Note 7)

The chromatography column according to Supplementary Note 6 for plant-derived component analysis.

(Supplementary Note 8)

A method for producing the chromatography column according to Supplementary Note 6 or 7, including:

- modifying; and
- packing, wherein
- in the modifying, silanol groups of silica gel particles contained in a packing material are modified, and
- in the packing, the silica after the modification is packed into a chromatography column.

(Supplementary Note 9)

A method for producing the chromatography column according to Supplementary Note 6 or 7, including:

- modifying; and
- packing, wherein
- in the modifying, silanol groups of monolithic silica contained in a packing material are modified, and
- in the packing, the silica after the modification is packed into a chromatography column.

(Supplementary Note 10)

A chromatography analysis apparatus, including:

a chromatograph,
an eluent, and
an analytical column, wherein
the analytical column is the chromatography column according to Supplementary Note 6 or 7.

(Supplementary Note 11)

The analysis apparatus according to Supplementary Note 10, wherein

the chromatograph includes a gradient elution part,
the eluent is a three or more-component eluent combining water and two or more types of water-soluble organic solvents, and
the gradient elution part performs gradient elution by using the eluent as a mobile phase to change a solvent composition of the eluent at a flow rate of 20 nL/min to 100 mL/min.

(Supplementary Note 12)

The analysis apparatus according to Supplementary Note 11, wherein
the water-soluble organic solvent includes at least one of an alcohol-based solvent or a nitrile-based solvent.

(Supplementary Note 13)

An analysis method using the analysis apparatus according to any one of Supplementary Notes 10 to 12.

(Supplementary Note 14)

A method for analyzing an analyte containing at least one compound selected from the group consisting of a hydrophilic compound and an amphiphilic compound by the analysis method according to Supplementary Note 13.

(Supplementary Note 15)

A method for analyzing plant-derived components by the analysis method according to Supplementary Note 14.
This application claims priority from Japanese Patent Application No. 2023-029001 filed on February 27, 2023. The entire subject matter of the Japanese Patent Application is incorporated herein by reference.

Industrial Applicability

As described above, according to the present disclosure, it is possible to provide a chromatography column packing material, a chromatography column, a method for producing the chromatography column, a chromatography analysis apparatus, and an analysis method, suitable for separation of a mixture containing various analytes. In particular, it is suitable for separation of plant components containing a large amount of hydrophilic or amphiphilic analytes. The applications of the present disclosure are not particularly limited. For example, the present disclosure can be used for a wide range of applications such as analysis, inspection, and diagnosis of foods, pharmaceuticals, chemicals, and the like.

## Claims

1. A chromatography column packing material, comprising:
silica having a silanol group modified with a group represented by the following chemical formula (I):

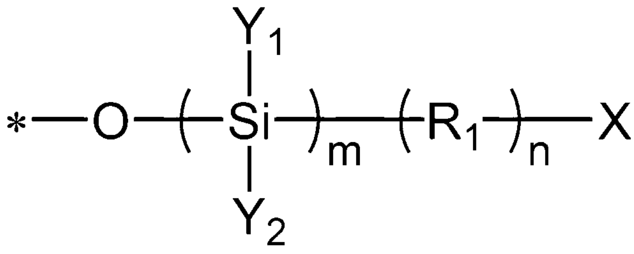

(I)

wherein in the chemical formula (I),

$R_1$ is a methylene group, and further, at least one hydrogen atom of the methylene group is optionally substituted with a substituent,
m is an integer of 1 or more,
n is 0 or a positive integer,
X is a methyl group, a linear or branched alkyl group, an amino group, an amido group, a cyano group, an aryl group, an alkylaryl group, a carboxy group, or a carbamoyl group, and further, at least one hydrogen atom of the alkyl group, the amino group, the aryl group, the alkylaryl group, the carboxy group, or the carbamoyl group is optionally substituted with a substituent,
at least one of $Y_1$ or $Y_2$ is a hydrophilic group, and $Y_1$ and $Y_2$ may be identical to or different from each other, and
* indicates a bonding position.

**2.** The packing material according to claim 1, wherein
a ratio of silanol groups (a) contained in the silica after the modification to silanol groups (b) contained in the silica before the modification is 100 mol% or more.

**3.** The packing material according to claim 1, wherein
in the chemical formula (I),
one of $Y_1$ or $Y_2$ is a hydrophobic group.

**4.** The packing material according to claim 1, wherein
in the chemical formula (I),
in X, the linear or branched alkyl group is a linear or branched alkyl group having 1 to 30 carbon atoms.

**5.** A chromatography column packing material, comprising:
silica modified with a reaction reagent represented by the following chemical formula (II):

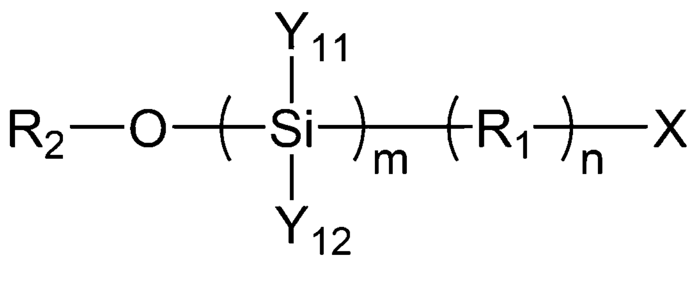

(II)

wherein in the chemical formula (II),

$R_1$ is a methylene group, and further, at least one hydrogen atom of the methylene group is optionally substituted with a substituent,

$R_2$ is a methyl group or a linear or branched alkyl group, and further, at least one hydrogen atom of the alkyl group is optionally substituted with a substituent,
m is an integer of 1 or more,
n is 0 or a positive integer,
X is a methyl group or a linear or branched alkyl group, an amino group, an amido group, a cyano group, an aryl group, an alkylaryl group, a carboxy group, or a carbamoyl group, and further, at least one hydrogen atom of the alkyl group, the amino group, the aryl group, the alkylaryl group, the carboxy group, or the carbamoyl group is optionally substituted with a substituent, and
at least one of $Y_{11}$ or $Y_{12}$ is a functional group capable of forming a silanol group.

**6.** A chromatography column packed with the packing material according to any one of claims 1 to 5.

**7.** The chromatography column according to claim 6 for plant-derived component analysis.

**8.** A method for producing the chromatography column according to claim 6 or 7, comprising:

modifying; and
packing, wherein
in the modifying, silanol groups of silica gel particles contained in a packing material are modified, and
in the packing, the silica after the modification is packed into a chromatography column.

**9.** A method for producing the chromatography column according to claim 6 or 7, comprising:

modifying; and
packing, wherein
in the modifying, silanol groups of monolithic silica contained in a packing material are modified, and
in the packing, the silica after the modification is packed into a chromatography column.

**10.** A chromatography analysis apparatus, comprising:

a chromatograph,
an eluent, and
an analytical column, wherein
the analytical column is the chromatography column according to claim 6.

**11.** The analysis apparatus according to claim 10, wherein

the chromatograph comprises a gradient elution part,
the eluent is a three or more-component eluent combining water and two or more types of water-soluble organic solvents, and
the gradient elution part performs gradient elution by using the eluent as a mobile phase to change a solvent composition of the eluent at a flow rate of 20 nL/min to 100 mL/min.

**12.** The analysis apparatus according to claim 11, wherein
the water-soluble organic solvent comprises at least one of an alcohol-based solvent or a nitrile-based solvent.

**13.** An analysis method using the analysis apparatus according to any one of claims 10 to 12.

**14.** A method for analyzing an analyte containing at least one compound selected from the group consisting of a hydrophilic compound and an amphiphilic compound by the analysis method according to claim 13.

**15.** A method for analyzing plant-derived components by the analysis method according to claim 14.

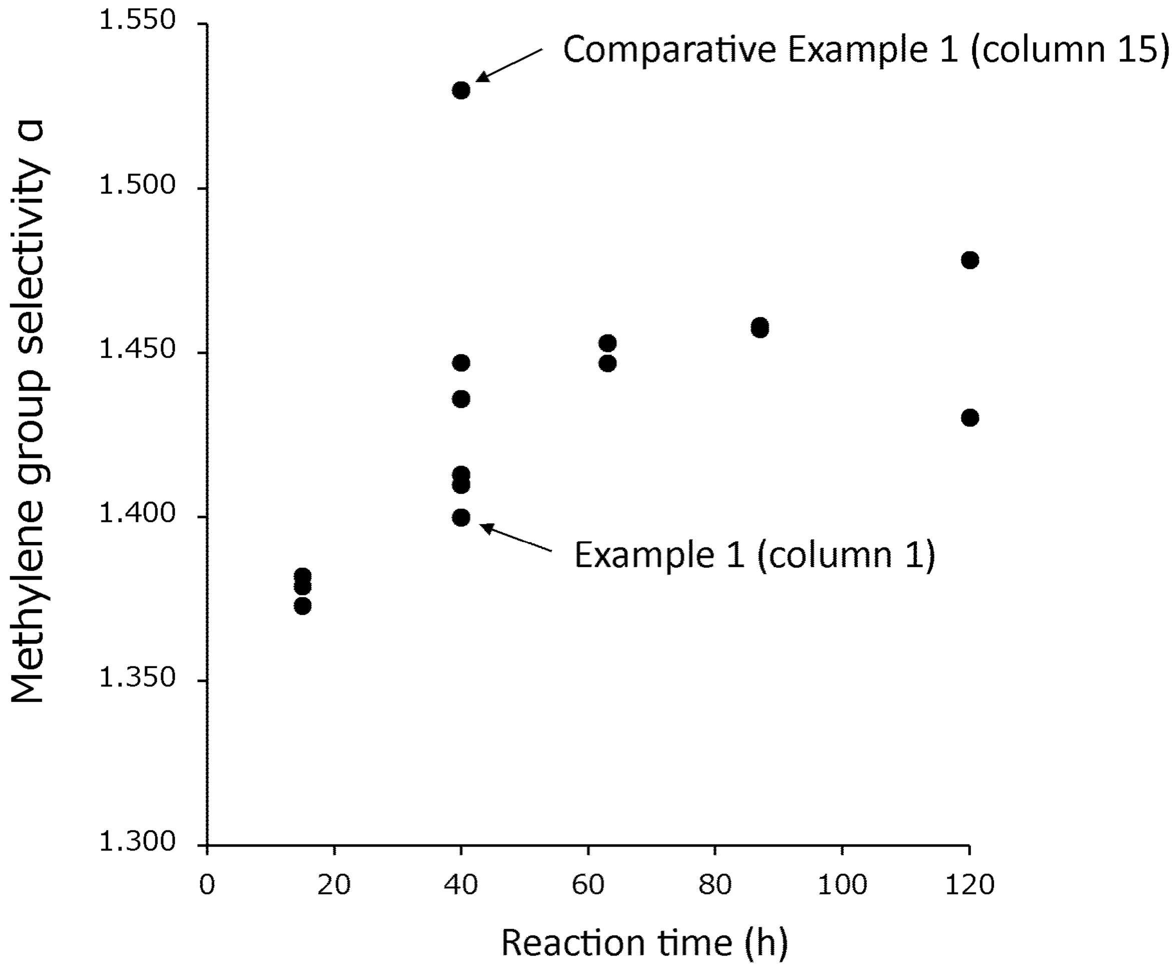
Comparative Example 1 (column 15)
Example 1 (column 1)
Methylene group selectivity α
1.550
1.500
1.450
1.400
1.350
1.300
0
20
40
60
80
100
120
Reaction time (h)

FIG. 1

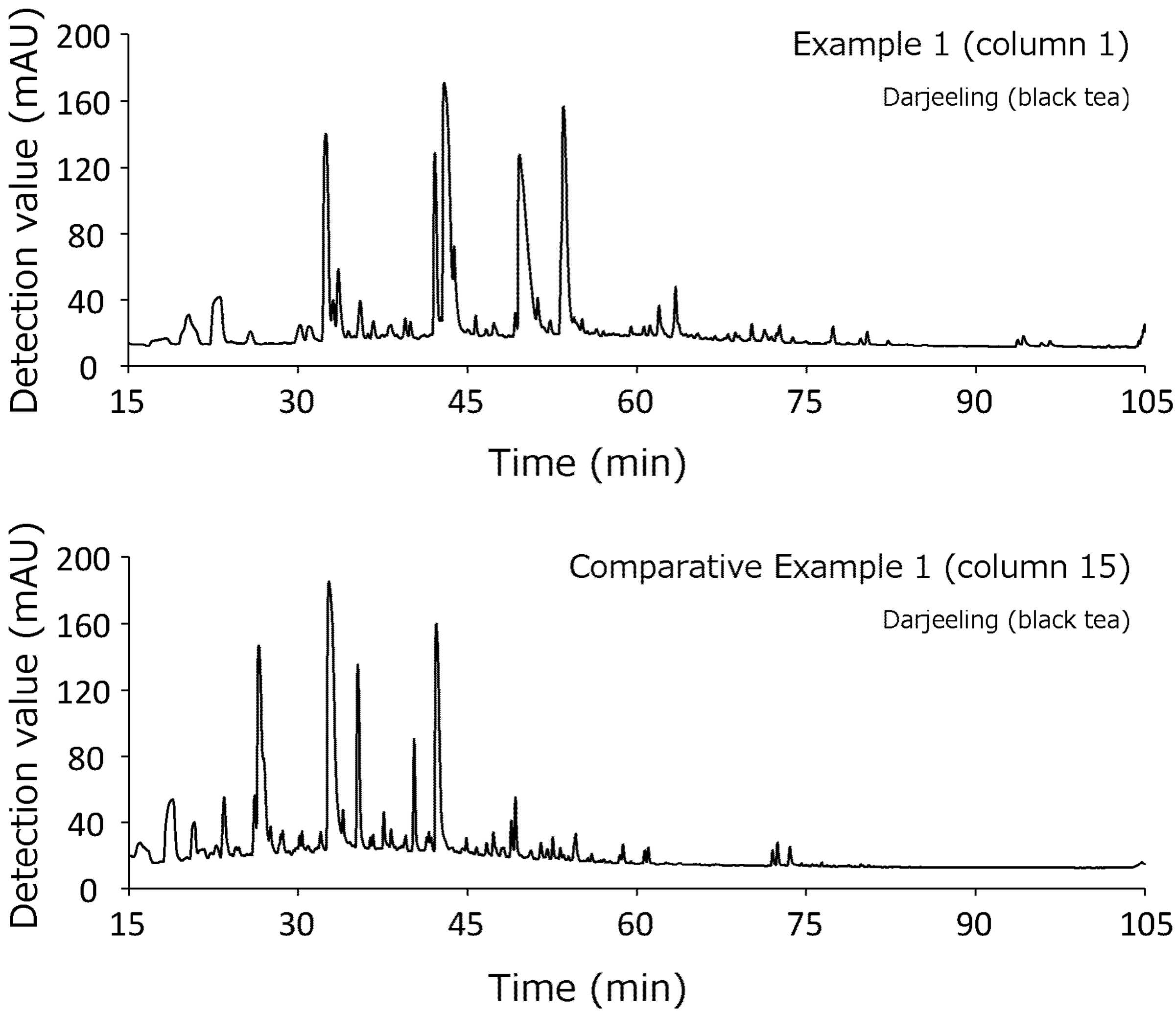
Example 1 (column 1)
Darjeeling (black tea)
Detection value (mAU)
200
160
120
80
40
0
15
30
45
60
75
90
105
Time (min)
Comparative Example 1 (column 15)
Darjeeling (black tea)
Detection value (mAU)
200
160
120
80
40
0
15
30
45
60
75
90
105
Time (min)

FIG. 2

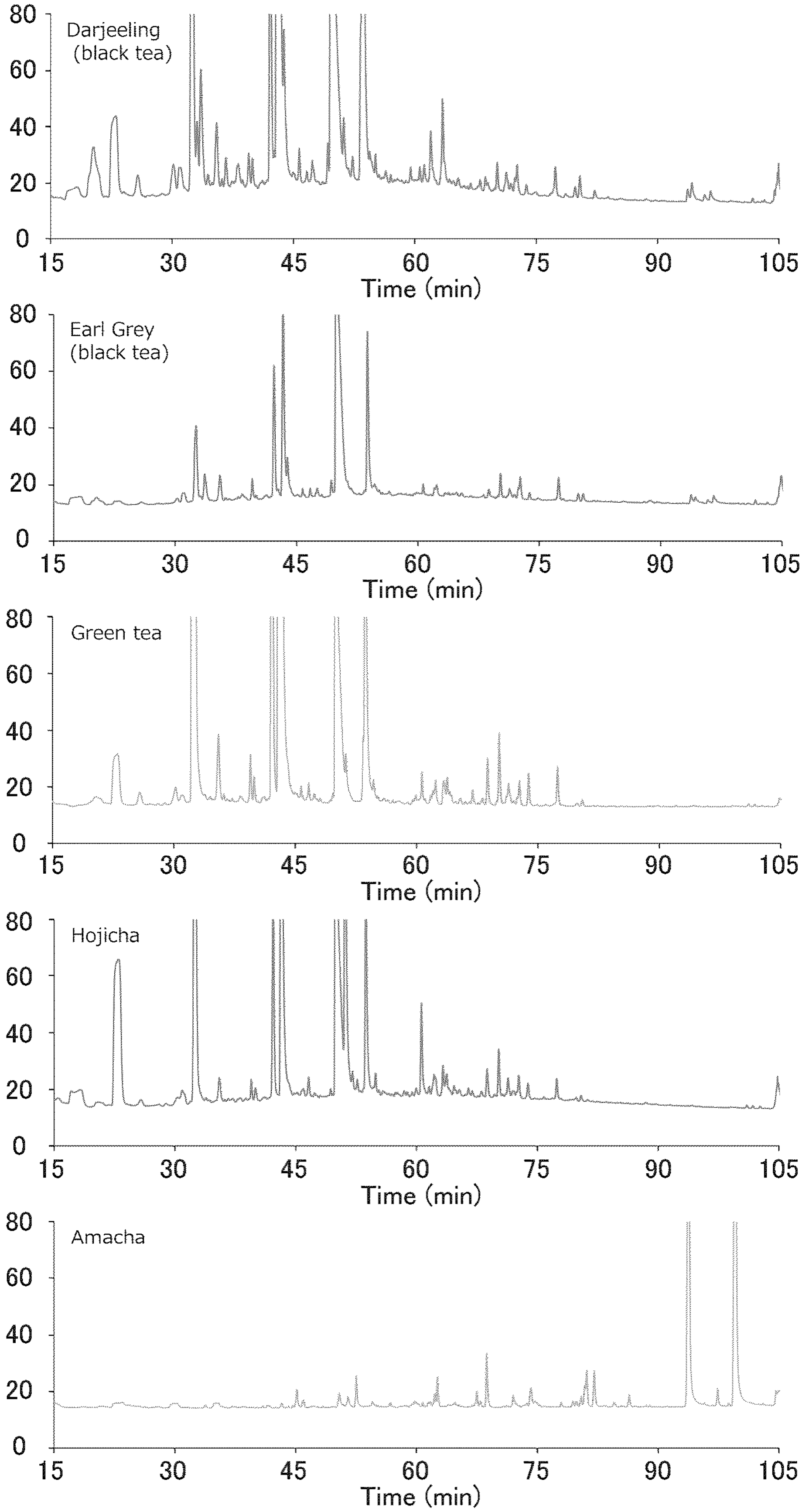
Darjeeling
(black tea)
Earl Grey
(black tea)
Green tea
Hojicha
Amacha
0
20
40
60
80
15
30
45
60
75
90
105
Time (min)

FIG. 3

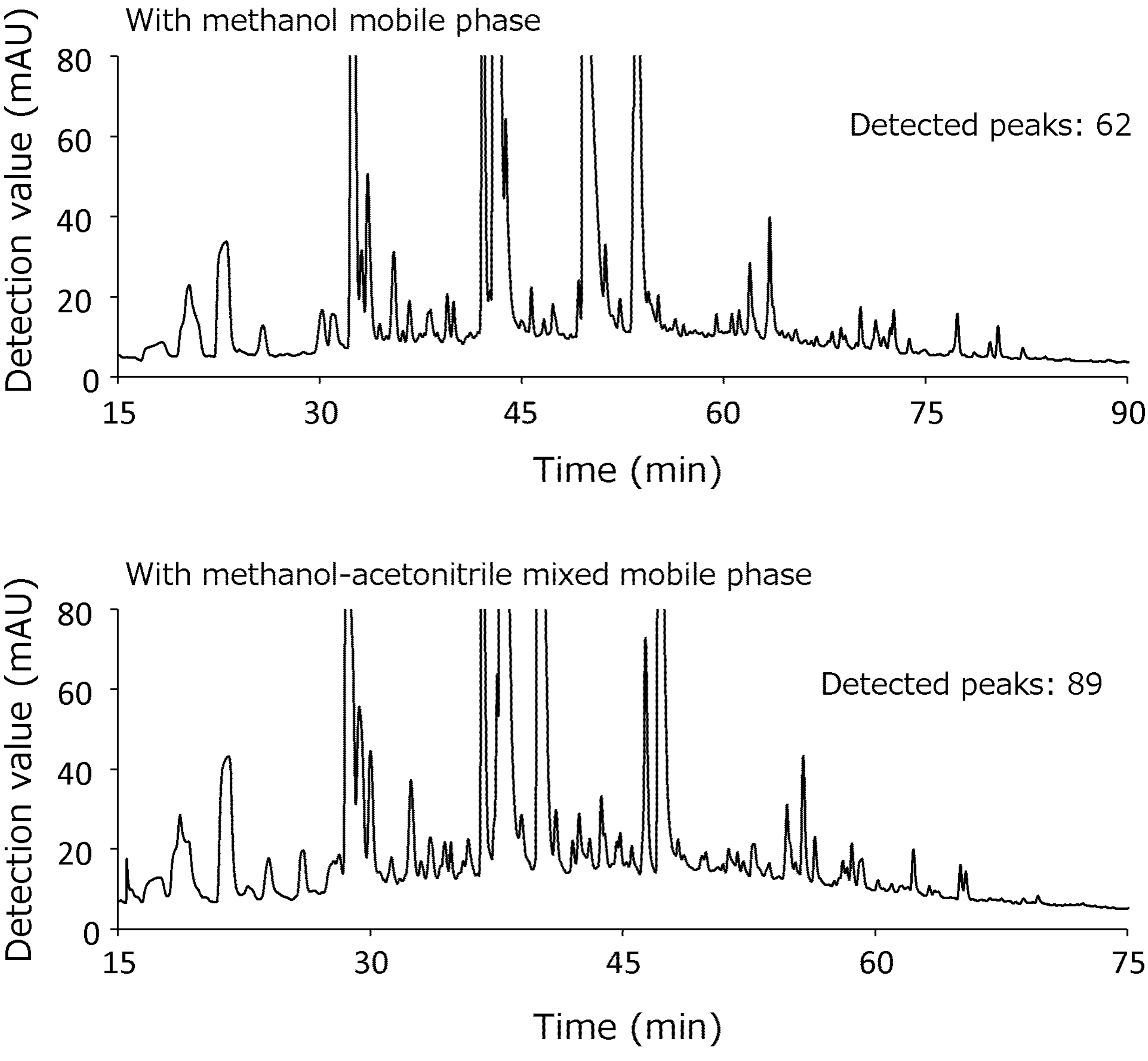
With methanol mobile phase
Detection value (mAU)
80
60
40
20
0
Detected peaks: 62
15
30
45
60
75
90
Time (min)
With methanol-acetonitrile mixed mobile phase
Detection value (mAU)
80
60
40
20
0
Detected peaks: 89
15
30
45
60
75
Time (min)

FIG. 4

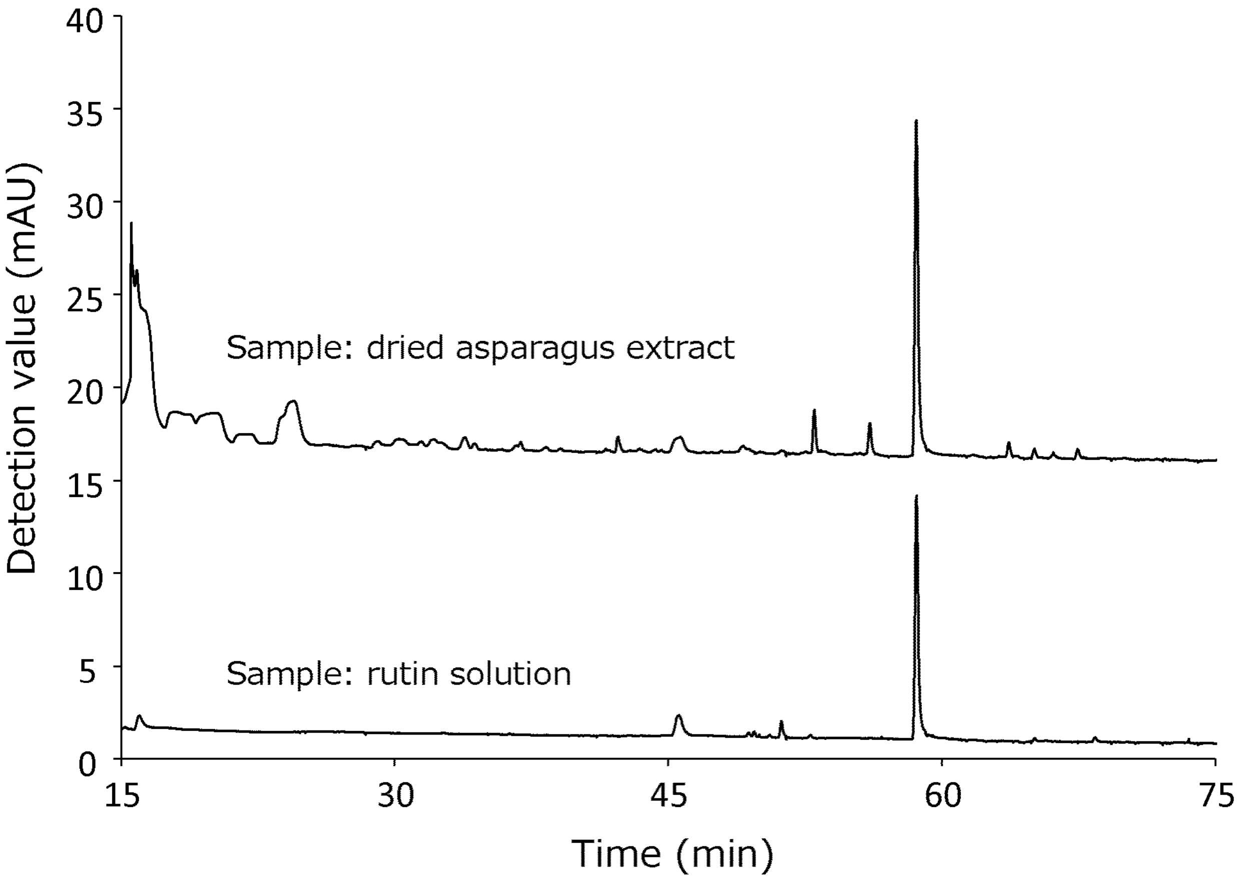
40
35
30
25
20
15
10
5
0
Detection value (mAU)
Sample: dried asparagus extract
Sample: rutin solution
15
30
45
60
75
Time (min)

FIG. 5

## INTERNATIONAL SEARCH REPORT

International application No.
**PCT/JP2024/006895**

### A. CLASSIFICATION OF SUBJECT MATTER

***B01J 20/286***(2006.01)i; ***B01D 15/16***(2006.01)i; ***B01D 15/20***(2006.01)i; ***B01J 20/10***(2006.01)i; ***B01J 20/281***(2006.01)i; ***B01J 20/283***(2006.01)i; ***B01J 20/288***(2006.01)i; ***G01N 30/26***(2006.01)i; ***G01N 30/34***(2006.01)i; ***G01N 30/56***(2006.01)i
FI: B01J20/286; B01J20/281 X; G01N30/34 A; G01N30/26 A; B01J20/281 G; G01N30/56 E; B01D15/16; B01D15/20; B01J20/10 A; B01J20/288; B01J20/283

According to International Patent Classification (IPC) or to both national classification and IPC

### B. FIELDS SEARCHED

Minimum documentation searched (classification system followed by classification symbols)

B01J20/286; B01D15/16; B01D15/20; B01J20/10; B01J20/281; B01J20/283; B01J20/288; G01N30/26; G01N30/34; G01N30/56

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2010-529431 A (DIONEX CORPORATION) 26 August 2010 (2010-08-26) claims 1-31, paragraphs [0091]-[0092] | 1-15 |
| A | JP 8-310809 A (WAKO PURE CHEMICAL INDUSTRIES, LTD.) 26 November 1996 (1996-11-26) entire text, all drawings | 1-15 |
| A | JP 2007-522476 A (VARIAN, INCORPORATED) 09 August 2007 (2007-08-09) entire text, all drawings | 1-15 |
| A | JP 57-003043 A (VARIAN ASSOCIATES, INC.) 08 January 1982 (1982-01-08) entire text, all drawings | 1-15 |
| A | JP 2016-538128 A (MEDISOTEC) 08 December 2016 (2016-12-08) entire text, all drawings | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 April 2024** | **07 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
PCT/JP2024/006895

C. DOCUMENTS CONSIDERED TO BE RELEVANT

| Category* | Citation of document, with indication, where appropriate, of the relevant passages | Relevant to claim No. |
|---|---|---|
| A | US 6375846 B1 (JARRETT, Harry Wellington) 23 April 2002 (2002-04-23) fig. 1 | 1-15 |

Form PCT/ISA/210 (second sheet) (July 2022)

**INTERNATIONAL SEARCH REPORT**
**Information on patent family members**

International application No.
**PCT/JP2024/006895**

| Patent document cited in search report | Publication date (day/month/year) | Patent family member(s) | Publication date (day/month/year) |
|---|---|---|---|
| JP 2010-529431 A | 26 August 2010 | US 2008/0293959 A1<br>claims 1-31<br>WO 2008/147717 A1<br>EP 2150339 A1 | |
| JP 8-310809 A | 26 November 1996 | (Family: none) | |
| JP 2007-522476 A | 09 August 2007 | US 2005/0178730 A1<br>entire text, all drawings<br>EP 1711258 A1 | |
| JP 57-003043 A | 08 January 1982 | US 4298500 A<br>entire text, all drawings<br>GB 2074892 A | |
| JP 2016-538128 A | 08 December 2016 | US 2016/0228849 A1<br>entire text, all drawings<br>EP 3046666 A1 | |
| US 6375846 B1 | 23 April 2002 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003172733 A
- JP 2023029001 A


### Non-patent literature cited in the description


- **KAZUHIRO KIMATA et al.** *JOURNAL OF CHROMATOGRAPHIC SCIENCE*, 1989, vol. 27, 721-728
- **YOSHIHISA SUDO et al.** *CHROMATOGRAPHY*, 2011, vol. 32 (2)